# FASCICULE DE BREVET EUROPEEN

(11) **EP 0 966 875 B1**
(45) Date de publication et mention de la délivrance du brevet: **03.09.2003**
(21) Numéro de dépôt: 99440134.7
(22) Date de dépôt: 04.06.1999
(51) Int. Cl.: A01C 7/20, A01B 49/06, A01B 73/04

(54) **Semoir**
Sähmaschine
Sowing machine

(30) Priorité: 25.06.1998 FR 9808189
(43) Date de publication de la demande: 29.12.1999
(73) Titulaire: KUHN S.A., 67706 Saverne Cedex (FR)
(72) Inventeur: Kirch, Michel, 67260 Keskastel (FR); Oberle, Edmond, 67700 Haegen (FR)

(56) Documents cités:
- EP-A- 0 513 939
- EP-A- 0 559 522
- EP-A- 0 629 337
- EP-A- 0 635 194
- US-A- 5 740 870

## Description

La présente invention concerne un semoir comportant :
- un châssis destiné à être lié directement ou indirectement à un véhicule moteur ;
- un dispositif d'implantation de la semence dans le sol comprenant au moins une première structure porteuse et une deuxième structure porteuse ;
- au moins un organe de référence détectant la surface au sol dans le voisinage dudit dispositif d'implantation de la semence dans le sol.

Il est connu dans l'état de la technique un semoir destiné à être attelé à une machine de travail du sol. Un tel semoir est décrit par exemple dans EP 0 629 337.

Ce semoir connu comporte un dispositif d'implantation de la semence dans le sol en trois parties :
- une structure porteuse centrale ;
- une première structure porteuse latérale ; et
- une deuxième structure porteuse latérale ;
à chaque structure porteuse sont liés des éléments semeurs.

Lors du travail, les trois structures porteuses s'étendent sensiblement orthogonalement à la direction d'avance sur une grande largeur de travail et peuvent se déplacer librement en hauteur par rapport à la machine de travail du sol. On notera en sus que les structures porteuses latérales sont articulées à la structure porteuse centrale de sorte à suivre les dénivellations du sol. A cet effet, lors du travail, chaque structure porteuse repose sur le sol au moyen d'au moins une roue située sous la structure porteuse correspondante, devant les éléments semeurs et derrière la machine de travail du sol.

Ce semoir présente un inconvénient majeur. En effet, les roues qui supportent les structures porteuses laissent des traces sur le sol et tassent ce dernier ce qui ne permet pas aux éléments semeurs situés dans les sillons desdites roues d'implanter correctement la semence dans le sol.

En outre, les roues supportant les structures porteuses sont de diamètre relativement conséquent pour assurer une bonne portance desdites structures porteuses, ce qui se traduit par un espace relativement important entre le semoir et la machine de travail du sol et donc par un porte-à-faux relativement important compliquant le transport et la conception du semoir et de la machine agricole.

On notera encore que, dans des conditions de travail difficiles, notamment humides, la terre reste collée aux roues ce qui génère trop souvent des bourrages du semoir et un mauvais fonctionnement de celui-ci.

La présente invention a pour but de remédier aux inconvénients de ce semoir connu, tout en veillant à obtenir un semoir qui s'adapte aisément au relief du terrain, qui est simple et peu onéreux.

A cet effet, le semoir selon la présente invention est caractérisé en ce qu'il est prévu
- un premier organe de référence et un deuxième organe de référence qui peuvent se déplacer en hauteur indépendamment du dispositif d'implantation de la semence dans le sol ;
- au moins un premier dispositif d'appui comportant une première butée et un premier élément d'appui, le premier dispositif d'appui est destiné à s'appuyer contre le premier organe de référence de manière à limiter le déplacement de la première structure porteuse ;
- au moins un deuxième dispositif d'appui comportant une deuxième butée et un deuxième élément d'appui, le deuxième dispositif d'appui est destiné à s'appuyer contre le deuxième organe de référence de manière à limiter le déplacement de la deuxième structure porteuse ;
- au moins un troisième dapositif d'appui comportant une troisième butée et au moins un élément d'appui, le troisième dispositif d'appui est destiné à s'appuyer contre l'un au moins des organes de référence de manière à limiter le déplacement d'au moins une desdites structures porteuses.

L'invention concerne également les caractéristiques suivantes considérées isolément ou dans toutes leurs combinaisons techniquement possibles :
- le dispositif d'implantation de la semence dans le sol comporte:
   ∗ une structure porteuse centrale ;
   ∗ une première structure porteuse latérale liée à l'une des extrémités de ladite structure porteuse centrale ; et
   ∗ une deuxième structure porteuse latérale liée à l'autre desdites extrémités de ladite structure porteuse centrale, le premier dispositif d'appui étant déstiné à limiter le déplacement de la première structure porteuse latérale, le deuxième dispositif d'appui étant destiné à limiter le déplacement de la deuxième structure porteuse latérale, et le troisième dispositif d'appui étant destiné à limiter le déplacement de la structure porteuse centrale.
- la structure porteuse centrale est liée au châssis au moyen d'une structure de liaison et chaque structure porteuse latérale est liée à l'extrémité latérale correspondante de ladite structure porteuse centrale au moyen d'une articulation respective d'axe longitudinal dirigé au moins sensiblement suivant la direction d'avance au travail ce qui permet notamment de replier lesdites structures porteuses latérales vers le haut pour le transport ;
- la structure de liaison comporte des bielles liées chacune au châssis au moyen d'une articulation et à la structure porteuse centrale au moyen d'une articulation, lesdites bielles formant avec le châssis et la structure porteuse centrale au moins sensiblement un parallélogramme de manière à permettre à ladite structure porteuse centrale de se déplacer au moins sensiblement vers le haut et vers le bas tout en restant, selon une vue de côté, au moins sensiblement parallèle au sol ;
- il est prévu un deuxième dispositif de manoeuvre permettant de pivoter chaque structure porteuse latérale vers le haut autour des axes longitudinaux de son articulation respective ;
- il est prévu au moins un deuxième dispositif de liaison permettant lors du travail, un certain débattement des structures porteuses latérales par rapport à la structure porteuse centrale ou au contraire de condamner ledit débattement de manière à permettre aux structures porteuses latérales de s'adapter au relief du sol pour obtenir une implantation optimale de la semence dans le sol ;
- chaque organe de référence est lié directement ou indirectement au châssis au moyen d'une articulation respective d'axe longitudinal dirigé au moins sensiblement suivant la direction d'avance au travail ce qui permet notamment de replier lesdits organes de référence vers le haut pour le transport ;
- il est prévu un premier dispositif de manoeuvre permettant de pivoter chaque organe de référence vers le haut autour de l'axe longitudinal de son articulation respective ;
- il est prévu un premier dispositif de liaison permettant, lors du travail, un certain débattement des organes de référence par rapport au premier châssis ou au contraire de condamner ledit débattement de manière à permettre, dans le premier cas de figure, aux organes de référence de s'adapter au relief du sol ;
- chaque dispositif d'appui limite le déplacement de la structure porteuse correspondante vers le bas de manière à définir grossièrement la profondeur de semis maximum ;
- le premier dispositif d'appui comporte d'une part une première butée fixée à la première structure porteuse latérale et d'autre part un premier élément d'appui fixé au premier organe de référence, ladite première butée étant destinée à s'appuyer contre ledit premier élément d'appui ;
- le deuxième dispositif d'appui comporte d'une part une deuxième butée fixée à la deuxième structure porteuse latérale et d'autre part, un deuxième élément d'appui fixé au deuxième organe de référence, ladite deuxième butée étant destinée à s'appuyer contre ledit deuxième élément d'appui ;
- la première et la deuxième butées sont fixées aux extrémités extérieures correspondantes des structures porteuses latérales correspondantes et le premier et le deuxième éléments d'appui sont fixés aux extrémités extérieures correspondantes des organes de référence correspondants ;
- il est prévu un moyen permettant d'escamoter la première et la deuxième butées ou le premier et le deuxième éléments d'appui ou la première et la deuxième butées et le premier et le deuxième éléments d'appui de sorte à pouvoir replier les structures porteuses latérales et les organes de référence vers le haut pour le transport sans se soucier de l'ordre de repliage ;
- le troisième dispositif d'appui comporte d'une part une troisième butée fixée à la structure porteuse centrale et d'autre part au moins un élément d'appui fixé au premier ou au deuxième organe de référence, ladite troisième butée étant destinée à s'appuyer contre ledit (lesdits) élément(s) d'appui ;
- le troisième dispositif d'appui comporte un élément d'appui primaire et un élément d'appui secondaire, ledit élément d'appui primaire étant fixé à l'extrémité intérieure à l'un des organes de référence tandis que l'élément d'appui secondaire est fixé à l'extrémité intérieure de l'autre organe de référence, la troisième butée s'appuyant contre l'élément d'appui situé le plus en hauteur ce qui positionne la structure porteuse centrale en fonction de l'organe de référence situé le plus en hauteur ;
- il est prévu au moins un moyen de réglage permettant de varier la position initiale des butées ou des éléments d'appui ou des butées et des éléments d'appui de manière à pouvoir varier la position des structures porteuses en fonction des différentes conditions de travail et en fonction des différents équipements dont est doté le semoir.

L'invention concerne également une machine agricole combinée de travail du sol et de semis comportant une machine de travail du sol et un semoir, ledit semoir présentant une ou plusieurs des caractéristiques ci-dessus.

Selon une autre caractéristique de l'invention, la machine combinée de travail du sol et de semis comporte deux rouleaux de rappuyage constituant les organes de référence, ces rouleaux de rappuyage évoluent toujours à la surface du sol.

Selon une autre caractéristique supplémentaire de l'invention, la machine agricole combinée de travail du sol et de semis comporte des outils de travail du sol qui peuvent se déplacer librement vers le haut par rapport aux rouleaux de rappuyage ce qui permet avantageusement de surmonter des obstacles qui s'étendent dans la parcelle, comme des pierres par exemple.

Selon une autre caractéristique supplémentaire de l'invention les rouleaux de rappuyage sont liés à la machine de travail du sol.

Selon une autre caractéristique supplémentaire de l'invention les rouleaux de rappuyage sont de forme au moins sensiblement cylindrique et s'étendent sur au moins sensiblement toute la largeur du semoir, chaque rouleau de rappuyage est destiné à rouler sur la surface du sol autour d'un axe de rotation respectif s'étendant au moins sensiblement horizontalement et transversalement à la direction d'avance au travail.

Selon une autre caractéristique supplémentaire de l'invention, chaque élément d'appui comporte une portion de surface cylindrique au moins sensiblement centrée sur l'axe de rotation du rouleau de rappuyage correspondant sur laquelle vient s'appuyer la butée correspondante ce qui permet avantageusement de conserver au moins sensiblement la même position de la butée correspondante lorsque la machine de travail du sol se déplace vers le haut ou le bas par exemple.

D'autres objets, caractéristiques et avantages de l'invention apparaissent dans la description suivante avec référence aux dessins annexés qui représentent, à titre d'exemples non limitatifs, quelques formes de réalisation du semoir selon l'invention.

Sur ces dessins :
- la figure 1 représente une vue de dessus d'une machine agricole combinée de travail du sol et de semis en position de travail, attelée à un véhicule moteur et comportant, selon une première forme de réalisation, un semoir selon l'invention ;
- la figure 2 représente une vue de côté de la machine agricole combinée de travail du sol et de semis en position de travail ;
- la figure 3 représente une vue de côté de la machine agricole combinée de travail du sol et de semis en position intermédiaire ;
- la figure 4 représente une vue de derrière partielle de la machine agricole combinée de travail du sol et de semis en position de transport ;
- la figure 5 représente, à une plus grande échelle, une vue suivant la flèche V définie sur la figure 1 ;
- la figure 6 représente, à une plus grande échelle, une vue partielle suivant la flèche VI définie sur la figure 2 ;
- la figure 7 représente une vue partielle suivant la flèche VII définie sur la figure 6 ;
- la figure 8 représente à une plus grande échelle, une vue partielle suivant la flèche VIII définie sur la figure 2 ;
- la figure 9 représente une coupe partielle vue suivant le plan IX-IX défini sur la figure 8 ;
- la figure 10 représente une vue de côté du semoir seul lié à un véhicule moteur selon l'invention en position de travail selon une deuxième forme de réalisation.

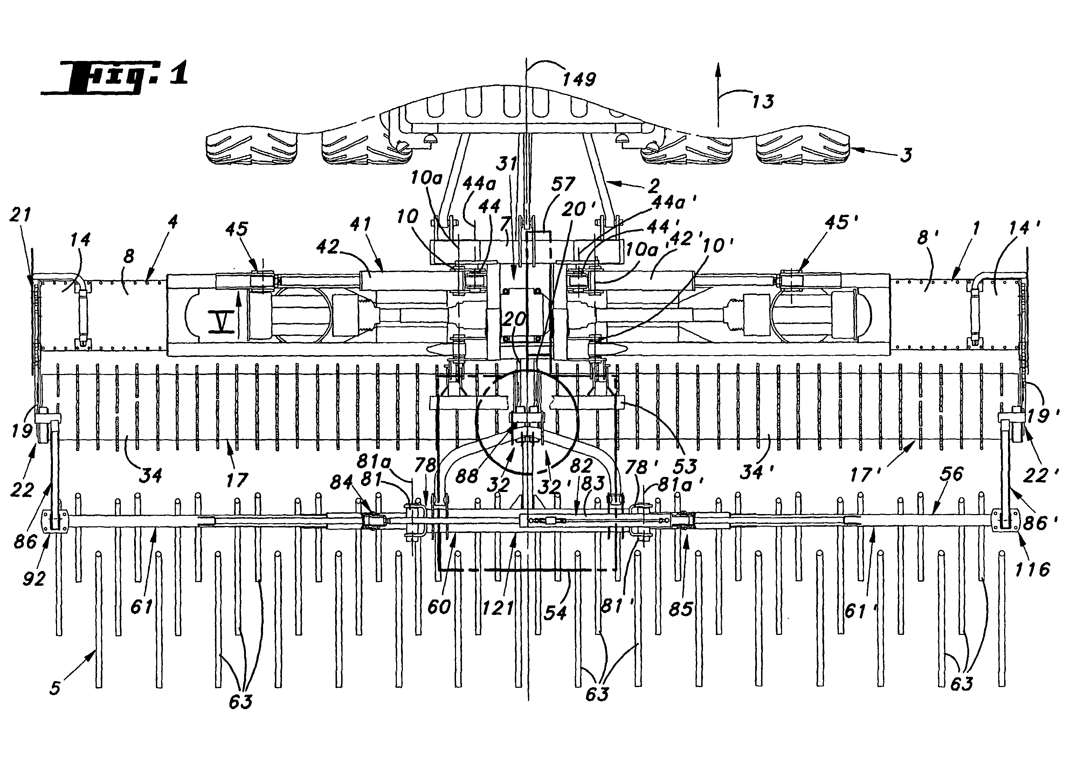

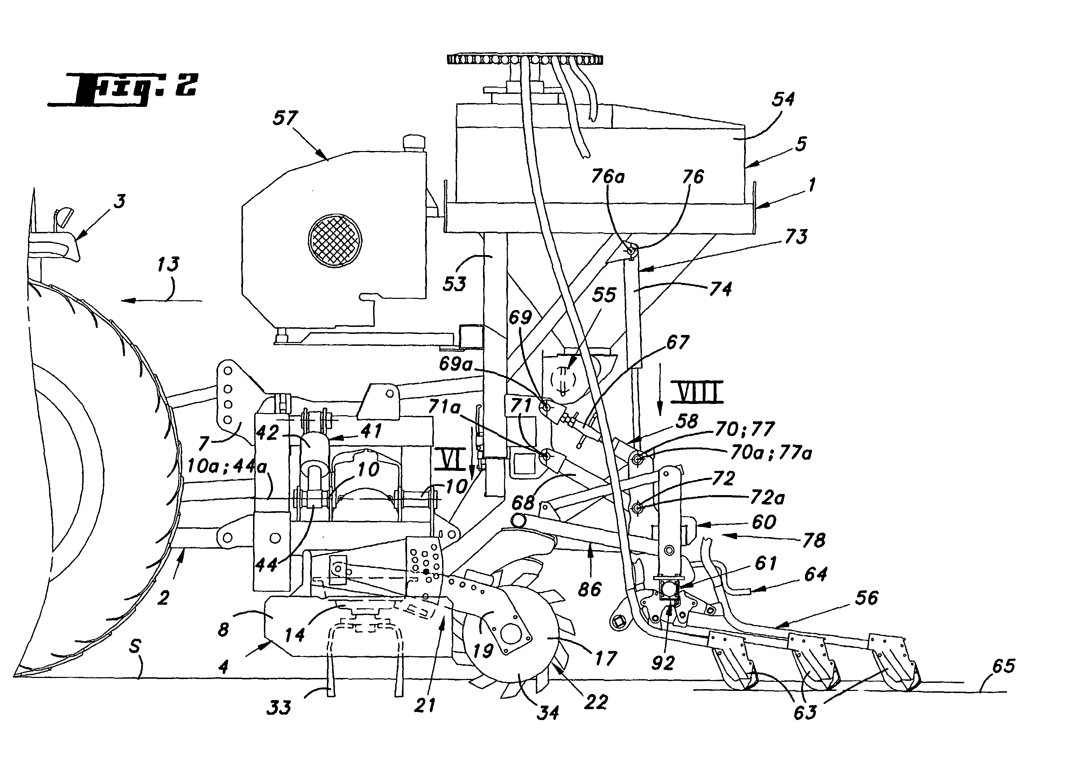

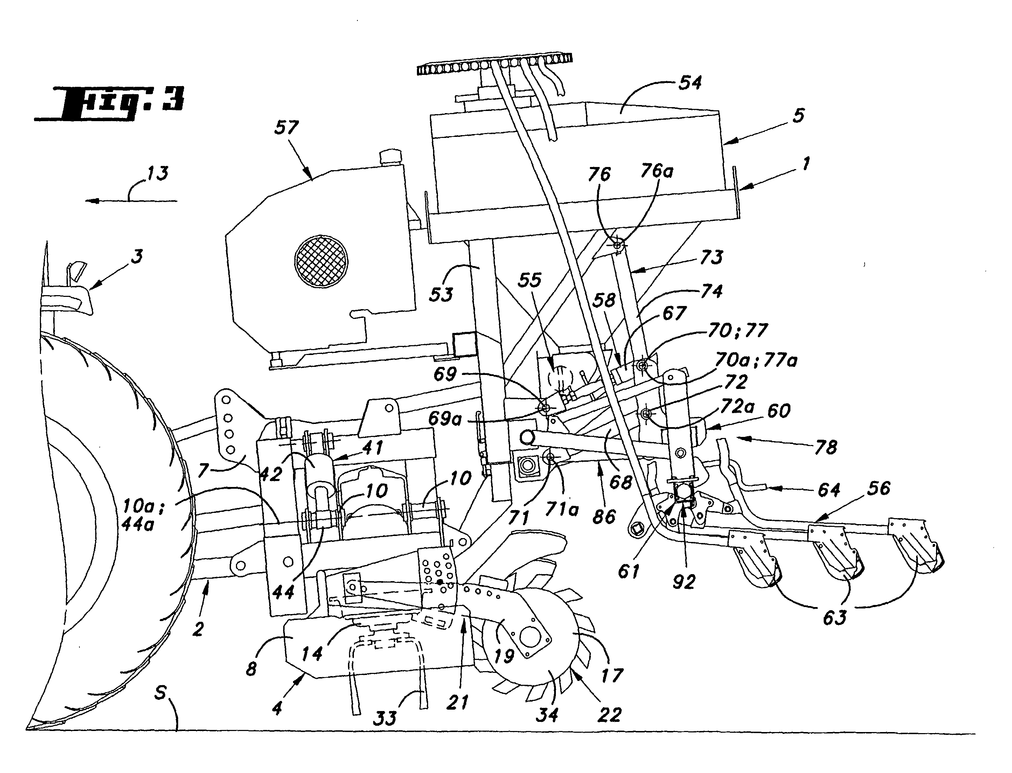

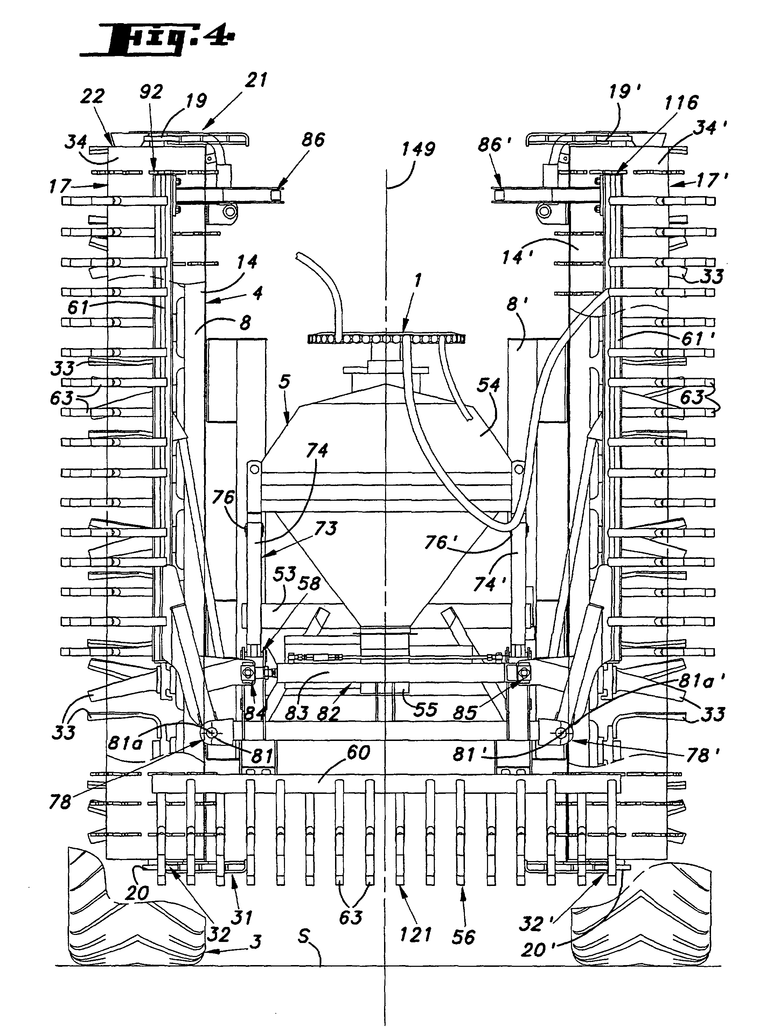

Sur les figures 1 à 9 apparaît une machine agricole combinée de travail du sol et de semis (1) liée à un dispositif d'attelage (2) d'un véhicule moteur (3). Cette machine agricole combinée de travail du sol et de semis (1) comprend une machine de travail du sol (4) et un semoir (5). La machine de travail du sol (4) comporte un premier châssis (7) lié au dispositif d'attelage (2) du véhicule moteur (3) et deux unités de travail du sol (8, 8') liées chacune audit premier châssis (7) au moyen d'une première articulation (10, 10') d'axe longitudinal (10a, 10a') au moins sensiblement horizontal dirigé au moins sensiblement suivant la direction d'avance au travail (13).

Chaque unité de travail du sol (8, 8') comporte, selon l'exemple de réalisation représenté, une herse rotative (14, 14') à laquelle est lié un organe de référence (17, 17') au moyen de deux bras (19, 20, 19', 20').

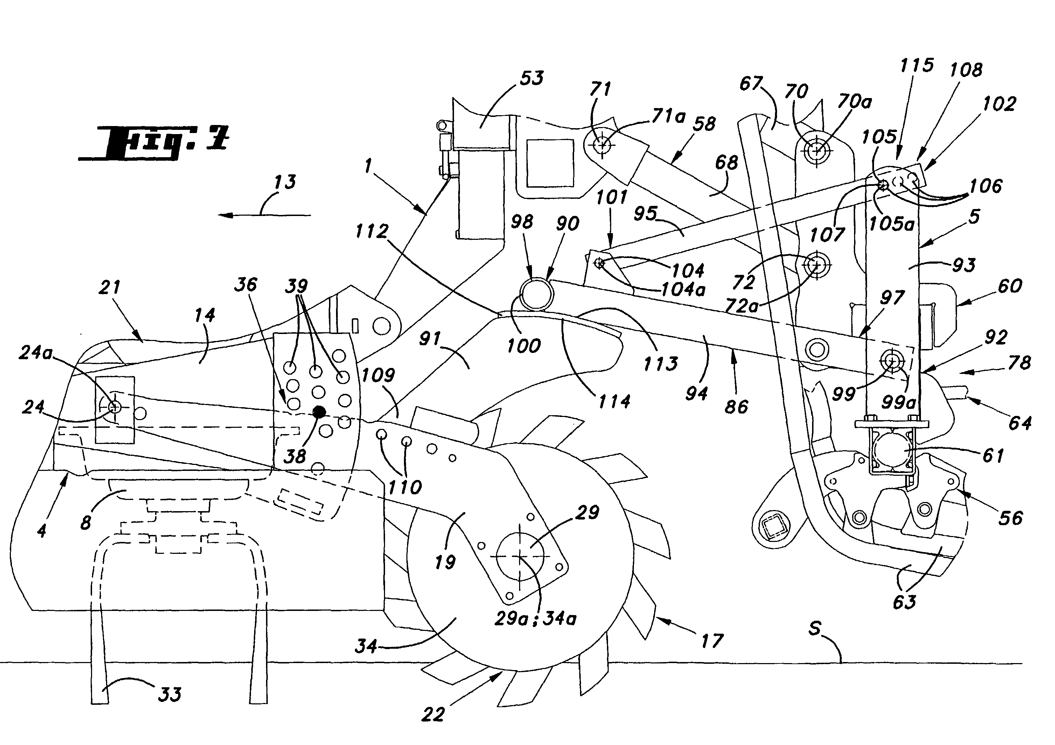

A la lumière de la figure 7, on voit que le premier bras (19) est d'une part lié à l'extrémité extérieure (21) de la herse rotative (14) au moyen d'une troisième articulation (24) d'axe longitudinal (24a) au moins sensiblement horizontal et orthogonal à la direction d'avance au travail (13) et est lié d'autre part à l'extrémité extérieure (22) du premier organe de référence (17) au moyen d'une quatrième articulation (29) d'axe longitudinal (29a) au moins sensiblement parallèle à l'axe longitudinal (24a) de ladite troisième articulation (24).

Le deuxième bras (20) (figure 1) est quant à lui lié à l'extrémité intérieure (31) de la herse rotative (14) et à l'extrémité intérieure (32) de l'organe de référence (17) de la même manière que celle décrite ci-dessus concernant le premier bras (19).

Les bras (19', 20') étant quant à eux liés à la herse rotative (14') et au deuxième organe de référence (17') de la même manière que les bras (19, 20) sont liés à la herse rotative (14) et au premier organe de référence (17) tel que décrit précédemment et tel qu'illustré par la figure 1.

On remarquera que chaque herse rotative (14, 14') comporte des outils de travail du sol (33) et que chaque organe de référence (17, 17') est constitué d'un rouleau de rappuyage (34, 34') de forme au moins sensiblement cylindrique. Les deux rouleaux de rappuyage (34, 34') s'étendent derrière les herses rotatives (14, 14') sensiblement orthogonalement à la direction d'avance au travail (13) et sur sensiblement toute la largeur de la machine de travail du sol (4) et du semoir (5). Chaque rouleau de rappuyage (34, 34') est destiné, lors du travail, à rouler sur la surface du sol (S) autour de son axe longitudinal (34a, 34a') respectif qui est au moins sensiblement confondu avec les deux axes longitudinaux (29a, 29a') correspondants. Ces rouleaux de rappuyage (34, 34') permettent d'une part de rappuyer le sol (S) pour permettre au semoir (5) de travailler dans de bonnes conditions et forment d'autre part de très bons organes de référence du fait qu'ils s'étendent toujours à une même distance du sol (S). A cet effet, on voit à la lumière de la figure 7 qu'il est prévu un dispositif de réglage (36, 36') de profondeur de travail de chaque herse rotative (14, 14') lequel consiste à limiter le débattement vers le haut des bras (19, 20, 19', 20') autour des axes longitudinaux (24a, 24a') des troisièmes articulations (24, 24') correspondantes. Chaque dispositif de réglage (36, 36') comporte à cet effet une broche (38, 38') pouvant être engagée dans différents trous (39) prévus à différents niveaux sur la herse rotative (14, 14') correspondante. Ces dispositifs de réglage (36, 36') sont largement connus par l'homme du métier et ne seront donc pas décrits davantage. On remarquera que les dispositifs de réglage (36, 36') sont au moins sensiblement identiques et que seul un desdits dispositif de réglage a été représenté.

On notera encore que chaque herse rotative (14, 14') peut, avec ses outils de travail du sol (33), se déplacer librement vers le haut par rapport aux rouleaux de rappuyage (34, 34') correspondant grâce notamment au dispositif de réglage (36, 36') correspondant qui limite le débattement des bras (19, 20, 19', 20') correspondants uniquement vers le haut. Un tel agencement permet avantageusement de surmonter des obstacles qui peuvent s'étendre dans la parcelle comme des pierres par exemple.

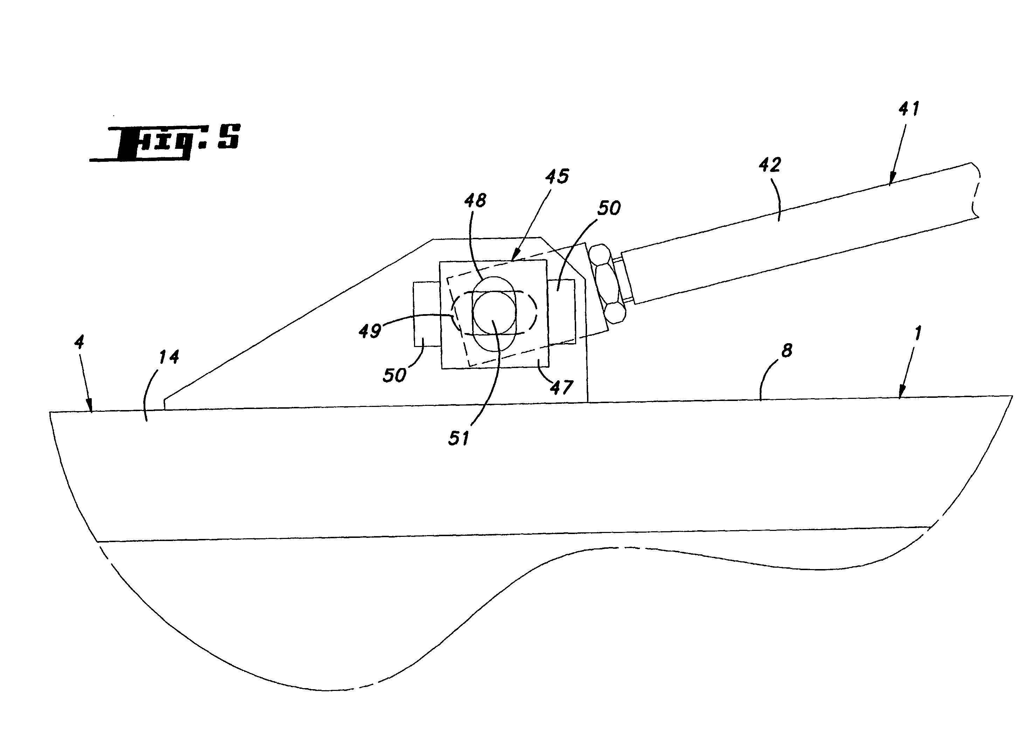

On notera encore qu'il est prévu un premier dispositif de manoeuvre (41) permettant de pivoter chaque unité de travail (8, 8') avec les rouleaux de rappuyage (34, 34') vers le haut jusque dans une position sensiblement verticale de transport autour des axes longitudinaux (10a, 10a') des premières articulations (10, 10'). A cet effet, le premier dispositif de manoeuvre (41) comporte un premier et un deuxième vérins de manoeuvre (42, 42'). Chaque vérin de manoeuvre (42, 42') est lié d'une part au premier châssis (7) au moyen d'une cinquième articulation (44, 44') d'axe longitudinal (44a, 44a') au moins sensiblement parallèle à l'axe longitudinal (10a, 10a') de la première ou de la deuxième articulation (10, 10') et d'autre part à une unité de travail (8, 8') au moyen d'un premier dispositif de liaison (45, 45'). Chaque dispositif de liaison (45, 45') permet, lors du travail, d'une part un certain débattement de l'unité de travail (8, 8') correspondante par rapport au premier châssis (7), de manière à permettre à l'unité de travail (8, 8') correspondante de s'adapter au relief du sol (S) ou d'autre part de condamner ledit débattement. A cet effet, on voit à la lumière de la figure 5 que le dispositif de liaison (45) comporte une cale (47) de forme sensiblement carrée à l'intérieure de laquelle est prévu un premier trou oblong (48). L'unité de travail (8) comporte d'une part, un deuxième trou oblong (49) s'étendant sensiblement horizontalement et d'autre part deux guides (50) s'étendant de part et d'autre de la cale (47) de sorte à maintenir cette dernière dans une position bien précise. On notera encore qu'il est prévu un tourillon (51) s'étendant au travers du premier trou oblong (48) de la cale (47), du deuxième trou oblong (49) de l'unité de travail (8) et au travers de l'extrémité du vérin de manoeuvre (42).

Le diamètre extérieur du tourillon (51) est sensiblement égal ou quelque peu inférieur à la dimension transversale du premier et du deuxième trous oblongs (48, 49) de manière à ce qu'il ait un faible jeu transversal dans un des trous oblongs (48, 49) tout en pouvant se déplacer dans le sens longitudinal desdits trous oblongs (48, 49) si l'agencement de la cale (47) le permet.

Selon l'exemple de réalisation représenté, on notera que la cale (47) s'étend entre les deux guides (50) de manière que son premier trou oblong (48) s'étende sensiblement verticalement, c'est-à-dire orthogonalement au deuxième trou oblong (49) de l'unité de travail (8) correspondant.

Lors du travail, le vérin de manoeuvre (42) étant de longueur fixe et les deux trous oblongs (48, 49) s'étendant orthogonalement l'un à l'autre, ne permet pas un mouvement relatif entre ledit vérin de manoeuvre (42) et l'unité de travail (8) puisque le tourillon (51) ne peut pas se déplacer dans le deuxième trou oblong (49).

Pour permettre au contraire, un certain débattement de l'unité de travail (8) par rapport au premier châssis (4) afin d'obtenir une bonne adaptation de ladite unité de travail (8) au sol (S), il suffit d'extraire la cale (47) des guides (50) et de la tourner de 90° pour ensuite la remettre en place entre lesdits guides (50). A cet effet, le premier trou oblong (48) de la cale (47) s'étend sensiblement horizontalement et est confondu avec le deuxième trou oblong (49) de l'unité de travail (8) ce qui permet donc au tourillon (51) de se déplacer longitudinalement dans les deux trous oblongs (48, 49) et donc à l'unité de travail du sol (8) de pivoter quelque peu autour de l'axe longitudinal (10a) de la première articulation (10) correspondante. On notera que le dispositif de liaison (45) est sensiblement identique au dispositif de liaison (45'). Ce dernier ne sera donc pas décrit davantage.

Le semoir (5) quant à lui comporte selon l'exemple de réalisation représenté :
- un deuxième châssis (53) lié au premier châssis (7) de la machine de travail du sol (4)
- une trémie (54) fixée audit deuxième châssis (53) et à la base de laquelle est situé un dispositif de dosage (55) permettant de doser la semence en provenance de la trémie (54) ;
- un dispositif d'implantation (56) de la semence dans le sol situé dans le proche voisinage des organes de référence (17, 17') ;
- un dispositif de soufflerie (57) débitant un flux d'air pour véhiculer la semence ; et
- une structure de liaison (58) liant ledit dispositif d'implantation (56) au deuxième châssis (53).

Le dispositif d'implantation (56) de la semence dans le sol comporte lui-même une structure porteuse centrale (60) et une première et une deuxième structures porteuses latérales (61, 61') auxquelles sont liés des éléments semeurs (63) au moyen desquels la semence est introduite dans le sol (S). Ces éléments semeurs (63) peuvent être réglés au moyen d'un dispositif de terrage (64) lequel exerce un effort vers le bas sur lesdits éléments semeurs (63) et permet à chaque élément semeur (63) de suivre individuellement les petites dénivellations du sol (S).

On remarquera encore à la lumière des figures 1 à 4 que les éléments semeurs (63) sont disposés l'un à côté de l'autre et suivant trois rangés situées l'une derrière l'autre ce qui permet avantageusement de semer dans des conditions très difficiles.

La structure porteuse centrale (60) du dispositif d'implantation (56) de la semence dans le sol est liée au deuxième châssis (53) au moyen de la structure de liaison (58). Cette structure de liaison (58) permet à la structure porteuse centrale (60) de se déplacer au moins sensiblement vers le haut et vers le bas tout en conservant un certain parallélisme entre la surface du sol (S) et une droite (65) passant par l'extrémité inférieure des éléments semeurs (63). Une telle structure de liaison (58) permet d'une part d'assurer une profondeur de semis au moins sensiblement identique des trois rangés d'éléments semeurs (63) lorsque les structures porteuses (60, 61, 61') se déplacent verticalement et d'autre part d'éviter des réglages complexes et onéreux lorsque l'on souhaite modifier la hauteur de travail desdites structures porteuses (60, 61, 61').

La structure de liaison (58) comporte deux bielles supérieures (67) et deux bielles inférieures (68). Chaque bielle supérieure (67) est liée d'une part au deuxième châssis (53) au moyen d'une sixième articulation (69) respective d'axe longitudinal (69a) au moins sensiblement horizontal et transversal à la direction d'avance (13) et d'autre part à la structure porteuse centrale (60) au moyen d'une septième articulation (70) respective d'axe longitudinal (70a) au moins sensiblement parallèle à l'axe longitudinal (69a) de ladite sixième articulation (69).

Chaque bielle inférieure (68) est liée, quant à elle, d'une part au deuxième châssis (53) au moyen d'une huitième articulation (71) d'axe longitudinal (71a) qui est, selon une vue de dessus, au moins sensiblement confondu avec l'axe longitudinal (69a) de la sixième articulation (69) et d'autre part à la structure porteuse centrale (60) au moyen d'une neuvième articulation (72) d'axe longitudinal (72a) qui est, selon une vue de dessus, au moins sensiblement confondu avec l'axe longitudinal (70a) de la septième articulation (70).

Les bielles inférieures (68), les bielles supérieures (67) forment avec le deuxième châssis (53) et la structure porteuse centrale (60) au moins sensiblement un parallélogramme.

On notera encore que les bielles supérieures (67) sont, selon l'exemple de réalisation représenté, de longueur réglable de manière à pouvoir ajuster au moins le parallélisme initial entre la droite (65) et le sol (S).

A la lumière des figures 1 à 4, on voit en outre qu'il est prévu un dispositif de relevage (73) permettant de relever le dispositif d'implantation (56) au moins sensiblement parallèlement par rapport au sol (S) pour effectuer les manoeuvres en bout de parcelle par exemple ou pour le transport.

A cet effet, le dispositif de relevage (73) comporte un troisième et un quatrième vérins de manoeuvre (74, 74') liés chacun d'une part au deuxième châssis (53) au moyen d'une dixième articulation (76, 76') et d'autre part à la structure porteuse centrale (60) au moyen d'une onzième articulation (77, 77').

A la lumière de la figure 1, on voit que les trois structures porteuses (60, 61, 61') s'étendent, en position de travail, au moins sensiblement orthogonalement à la direction d'avance au travail (13) et derrière les rouleaux de rappuyage (34, 34') sur sensiblement toute la largeur de la machine de travail du sol (4) et dans le proche voisinage de ces derniers (34, 34'). A cet effet, les trois structures porteuses (60, 61, 61') s'étendent dans le prolongement l'une de l'autre. Plus précisément les structures porteuses latérales (61, 61') sont liées aux extrémités latérales (78, 78') de la structure porteuse centrale (60) au moyen d'une douzième articulation (81, 81') respective d'axe longitudinal (8 la, 81a') au moins sensiblement horizontal et dirigée au moins sensiblement suivant la direction d'avance au travail (13). Une telle liaison des structures porteuses latérales (61, 61') à la structure porteuse centrale (60) permet avantageusement de replier lesdites structures porteuses latérales (61, 61') vers le haut pour le transport par exemple et en sus une meilleure adaptation desdites structures porteuses (60, 61, 61') au relief du sol (S). A cet effet est prévu un deuxième dispositif de manoeuvre (82) permettant de pivoter chaque structure porteuse latérale (61, 61') vers le haut autour des axes longitudinaux (81a, 81a') de la douzième articulation (81, 81') correspondante. A cet effet le deuxième dispositif de manoeuvre (82) comporte un quatrième vérin de manoeuvre (83) lié d'une part à la première structure porteuse latérale (61) au moyen d'un deuxième dispositif de liaison (84) et d'autre part à la deuxième structure porteuse latérale (61') au moyen d'un troisième dispositif de liaison (85).

Ce deuxième et ce troisième dispositifs de liaison (84, 85) permettent chacun, lors du travail, d'une part un certain débattement des structures porteuses latérales (61, 61') par rapport à la structure porteuse centrale (60) ou d'autre part de condamner ledit débattement de manière que les trois structures porteuses (60, 61, 61') forment un ensemble rigide. Le deuxième et le troisième dispositifs de liaison (84, 85) sont semblables au premier dispositif de liaison (45), décrit précédemment, et ne seront par conséquent pas décrits davantage.

Lors du travail, le dispositif d'implantation (56) de la semence dans le sol (S) s'appuie au moins partiellement contre les rouleaux de rappuyage (34, 34') pour limiter le déplacement dudit dispositif d'implantation (56) et optimiser ainsi le contrôle de la profondeur de semis.

On voit plus précisément à la lumière des différentes figures 1 à 9 qu'il est prévu :
- un premier dispositif d'appui (86) s'appuyant, lors du travail, contre le premier rouleau de rappuyage (34) de manière à limiter le déplacement de la première structure porteuse latérale (61) ;
- un deuxième dispositif d'appui (86') s'appuyant, lors du travail, contre le deuxième rouleau de rappuyage (34') de manière à limiter le déplacement de la deuxième structure porteuse latérale (61') ; et
- un troisième dispositif d'appui (88) s'appuyant, lors du travail, contre l'un au moins des rouleaux de rappuyage (34, 34') de manière à limiter le déplacement de la structure porteuse centrale (60).

On notera encore que, lors du travail, le troisième et le quatrième vérins de manoeuvre (74, 74') du dispositif de relevage (73) sont flottants de manière à autoriser aux différentes structures porteuses (60, 61, 61') de se déplacer vers le haut et vers le bas.

A cet effet, chaque dispositif d'appui (86, 86', 88) limite essentiellement le déplacement des structures porteuses (60, 61, 61') correspondantes vers le bas de manière à assurer une position desdites structures porteuses (60, 61, 61') au moins sensiblement identique par rapport à la surface du sol (S) ce qui permet d'obtenir une profondeur de semis au moins sensiblement constante.

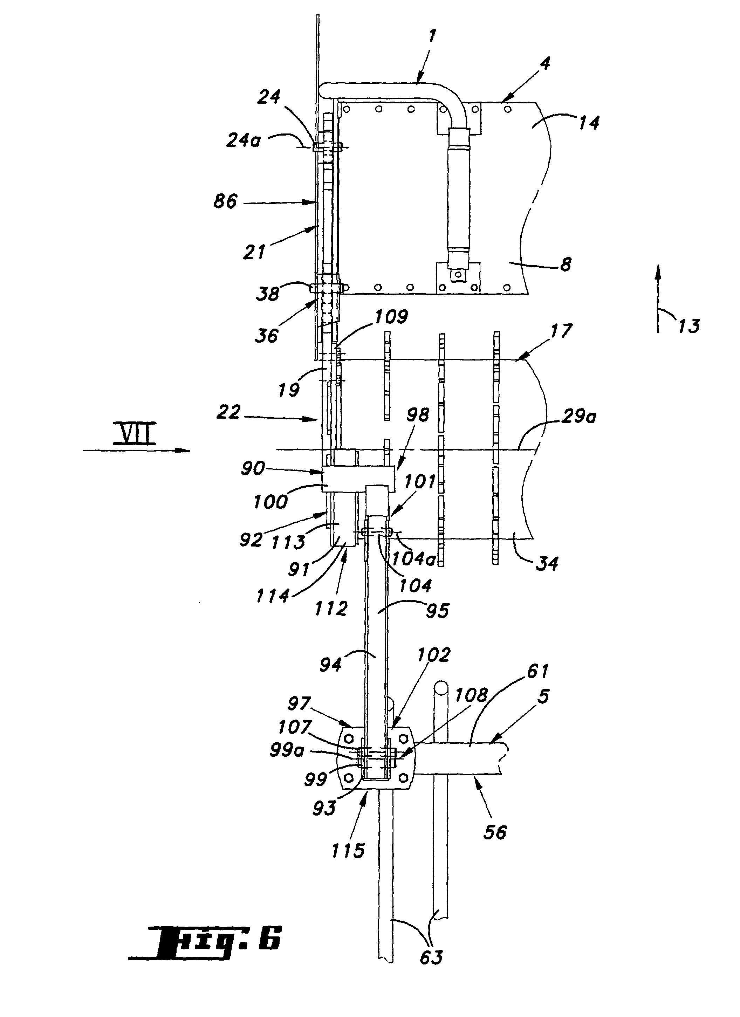

A la lumière des figures 6 et 7, on voit que le premier dispositif d'appui (86) comporte d'une part une première butée (90) et d'autre part un premier élément d'appui (91). La première butée (90) est fixée à l'extrémité extérieure (92) de la première structure porteuse latérale (61) et comporte, selon l'exemple de réalisation représenté, un support latéral (93) qui est bridé sur ladite première structure porteuse latérale (61), un bras d'appui (94) et une bielle de maintien (95). Le bras d'appui (94) est lié à l'une (97) de ses extrémités (97, 98) au support latéral (93) au moyen d'une treizième articulation (99) d'axe longitudinal (99a) au moins sensiblement parallèle à l'axe longitudinal (34a) du premier rouleau de rappuyage (34) situé juste devant la première structure porteuse latérale (61). A l'autre extrémité (98), le bras d'appui (94) est doté d'une partie coudée (100) qui s'étend sensiblement orthogonalement à la direction d'avance au travail (13) et qui s'appuie lors du travail contre le premier élément d'appui (91).

La bielle de maintien (95) est quant à elle liée à l'une (101) de ses extrémités (101, 102), à l'autre extrémité (98) du bras d'appui (94) au moyen d'une quatorzième articulation (104) d'axe longitudinal (104a) au moins sensiblement parallèle à l'axe longitudinal (34a) du premier rouleau de rappuyage (34).

A l'autre extrémité (102), la bielle de maintien (95) est liée au support latéral (93) au moyen d'une quinzième articulation (105) d'axe longitudinal (105a) au moins sensiblement parallèle à l'axe longitudinal (104a) de la quatorzième articulation (104). On remarquera que la quinzième articulation (105) est située plus haut que la quatorzième articulation (104) ce qui permet avantageusement d'obtenir une bonne stabilité de la première butée (90).

A la lumière de la figure 7, on voit en sus que la bielle (95) comporte à l'autre extrémité (102) une pluralité de trous (106) au travers desquels est destiné à s'étendre un arbre (107) faisant partie de la quinzième articulation (105). Ces différents trous (106) permettent de lier la bielle (95) au support latéral (93) en différentes positions, ce qui permet avantageusement de déplacer vers le haut ou vers le bas la partie coudée (100).

Les différents trous (106) avec l'arbre (107) forment ainsi un moyen de réglage (108) permettant de varier la position initiale de la première butée (90) de sorte à pouvoir varier la position de la première structure porteuse latérale (61) en fonction des différentes conditions de travail et en fonction des différents équipements dont est doté le semoir (5) ou la machine de travail du sol (4).

Le premier élément d'appui (91) du premier dispositif d'appui (86) est fixé à l'extrémité extérieure (22) du premier organe de référence (17). Plus précisément, on voit à la lumière de la figure 7 que le premier élément d'appui (91) est fixé à son extrémité inférieure (109) au premier bras (19) liant le premier organe de référence (17) à la herse rotative (14) au moyen de boulons (110).

Selon l'exemple de réalisation représenté, le premier élément d'appui (91) s'étend vers l'arrière et vers le haut et comporte à son extrémité supérieure (112) une surface d'appui (113) située au moins sensiblement à la verticale de l'axe longitudinal (34a) du premier rouleau de rappuyage (34) et au-dessus de ce dernier et sur laquelle s'appuie, lors du travail, la partie coudée (100) du bras d'appui (94). Cette surface d'appui (113) est formée par une portion de surface cylindrique (114) au moins sensiblement centrée sur l'axe de rotation (34a) du premier rouleau de rappuyage (34). Un tel agencement de la portion de surface cylindrique (114) permet avantageusement à la herse rotative (14) de se déplacer vers le haut et vers le bas pour surmonter un obstacle par exemple, sans que cela ait des répercussions sur la première butée (90) et donc sur la première structure porteuse latérale (61). En effet, lors d'un tel déplacement de la herse rotative (14), le premier élément d'appui (91) bascule vers l'arrière ou vers l'avant au moins sensiblement autour de l'axe de rotation (34a) du premier rouleau de rappuyage (34) et la partie coudée (100) du bras d'appui (94) se déplace le long de la portion de surface cylindrique (114) sans pour autant se déplacer vers le haut ou vers le bas du fait que ladite portion de surface cylindrique (114) est au moins sensiblement centrée sur ledit axe de rotation (34a).

On notera encore que le moyen de réglage (108) et la treizième articulation (99) forment en sus un moyen (115) permettant d'escamoter la première butée (90) lorsque le débattement des structures porteuses latérales (61, 61') par rapport à la structure porteuse centrale (60) est condamné ou lorsque la machine agricole combinée de travail du sol et de semis (1) est amenée en position de transport. Pour escamoter la première butée (90), il suffit, selon l'exemple de réalisation représenté, de retirer l'arbre (107) de sorte à désolidariser l'autre extrémité (102) de la bielle de maintien (95) du support latéral (93) pour ensuite pivoter le bras d'appui (94) vers le haut autour de l'axe longitudinal (99a) de la treizième articulation (99).

Le deuxième dispositif d'appui (86') est semblable au premier dispositif d'appui (86). Ce deuxième dispositif d'appui (86') comporte sensiblement le même nombre d'éléments qui sont une réplique sensiblement identique des éléments constituant le premier dispositif d'appui (86). Ce deuxième dispositif d'appui (86') ne sera donc pas décrit davantage.

On notera toutefois que le deuxième dispositif d'appui (86') comporte d'une part une deuxième butée (90') fixée à l'extrémité extérieure (116) de la deuxième structure porteuse latérale (61') et d'autre part un deuxième élément d'appui (91') fixé au bras (19') liant le deuxième organe de référence (17') à la herse rotative (14') et sur lequel vient s'appuyer ladite deuxième butée (90') lors du travail.

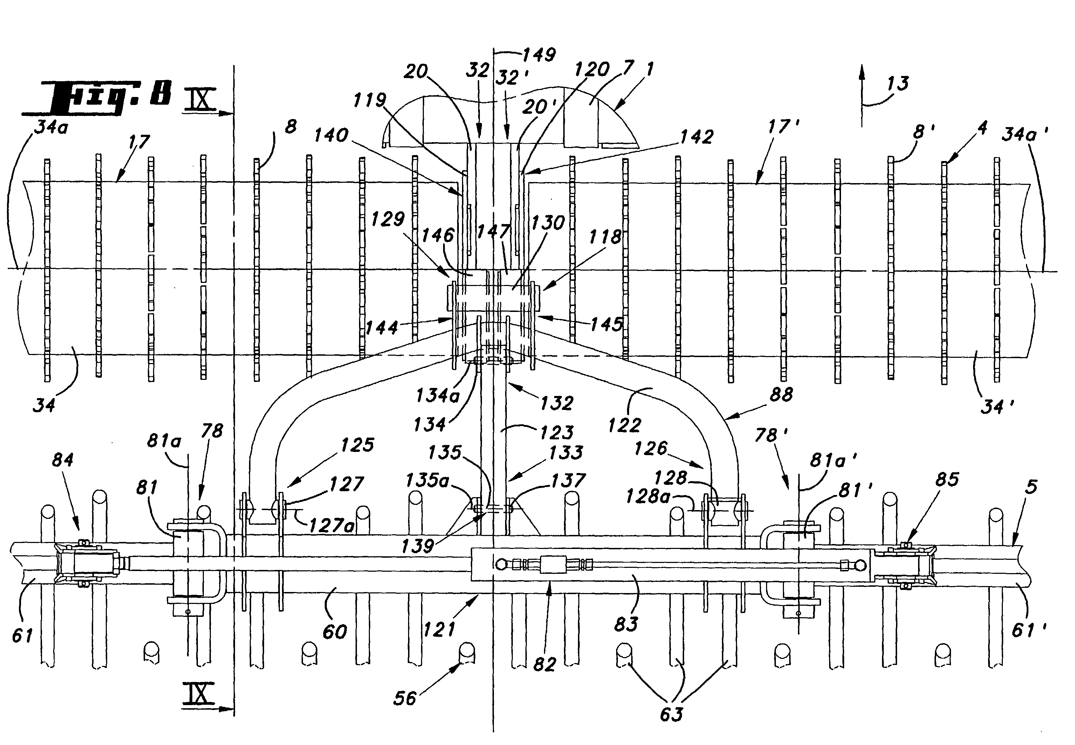

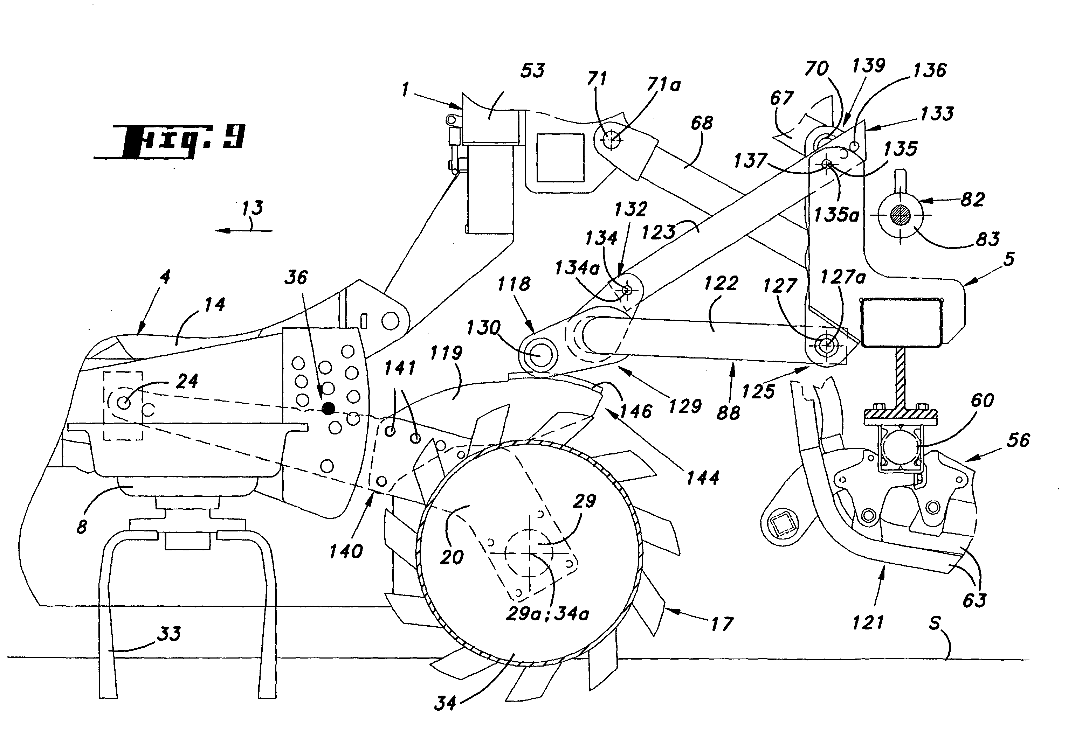

A la lumière des figures 8 et 9, on voit que le troisième dispositif d'appui (88) comporte d'une part une troisième butée (118) et d'autre part deux éléments d'appui (119, 120).

La troisième butée (118) est fixée sensiblement à la partie médiane (121) de la structure porteuse centrale (60) et comporte, selon l'exemple de réalisation représenté, un arceau (122) et un bras de maintien (123). L'arceau (122) s'étend, en position de travail, sensiblement horizontalement et vers l'avant dans la direction d'avance au travail (13). Il est lié à chacune de ses extrémités arrières (125, 126) à la structure porteuse centrale (60) au moyen d'une seizième articulation (127) et d'une dix-septième articulation (128) d'axes longitudinaux (127a, 128a) respectifs au moins sensiblement parallèles aux axes longitudinaux (34a, 34a') des rouleaux de rappuyage (34, 34') situés juste devant ladite structure porteuse centrale (60).

A l'extrémité frontale (129) de l'arceau (122) est prévue une traverse d'appui (130) qui s'étend en position de travail au-dessus des deux éléments d'appui (119, 120) et qui s'appuie contre au moins un desdits éléments d'appui (119, 120). Le bras de maintien (123) est quant à lui lié à l'une (132) de ses extrémités (132, 133) à l'arceau (122) au moyen d'une dix-huitième articulation (134) d'axe longitudinal (134a) au moins sensiblement parallèle aux axes longitudinaux (127a, 128a) de la seizième et de la dix-septième articulations (127, 128), ladite dix-huitième articulation (134) étant située dans le proche voisinage de la traverse d'appui (130).

A l'autre extrémité (133) le bras de maintien (123) est lié à la structure porteuse centrale (60) au moyen d'une dix-neuvième articulation (135) d'axe longitudinal (135a) au moins sensiblement parallèle à l'axe longitudinal (134a) de la dix-huitième articulation (134). Cette dix-neuvième articulation (135) est située, d'une part, selon une vue de dessus, au moins sensiblement au milieu de la seizième et de la dix-septième articulations (127, 128) et d'autre part, selon une vue de côté, plus haut que la dix-huitième articulation (134) ce qui permet avantageusement d'obtenir une bonne stabilité de la troisième butée (118).

A la lumière de la figure 9, on voit en outre que le bras de maintien (123) comporte à l'autre extrémité (133) une pluralité de trous (136) au travers desquels est destiné à s'étendre un autre arbre (137) faisant partie de la dix-neuvième articulation (135). Ces différents trous (136) permettent de lier le bras de maintien (123) à la structure porteuse centrale (60) en différentes positions, ce qui permet avantageusement de déplacer vers le haut ou vers le bas la traverse d'appui (130) pour l'ajuster au même niveau que la partie coudée (100, 100') des premières butées (90, 90').

Les différents trous (136) avec l'autre arbre (137) forment ainsi un autre moyen de réglage (139) permettant de varier la position initiale de la troisième butée (118) de sorte à pouvoir varier la position de la structure porteuse centrale (60) en fonction d'une part des différentes conditions de travail et en fonction des différents équipements dont est doté le semoir (5) ou la machine de travail du sol (4) et d'autre part en fonction de la position des structures porteuses latérales (61, 61').

De tels moyens de réglage (108, 139) permettent par exemple d'équiper la machine de travail du sol (4) de rouleau de rappuyage de différents diamètres.

L'élément d'appui primaire (119) de la troisième butée (118) est fixé à l'extrémité intérieure (32) du premier organe de référence (17) alors que l'élément d'appui secondaire (120) est fixé à l'extrémité intérieure (32') du deuxième organe de référence (17'). Plus précisément, on voit à la lumière des figures 8 et 9 que l'élément d'appui primaire (119) est fixé à son extrémité inférieure (140) au deuxième bras (20) liant le premier organe de référence (17) à la herse rotative (14) au moyen de boulons (141) alors que l'élément d'appui secondaire (120) est fixé à son extrémité inférieure (142) au deuxième bras (20') liant le deuxième organe de référence (17') à la herse rotative (14') au moyen d'autres boulons (non représentés).

Selon l'exemple de réalisation représenté, les éléments d'appui (119, 120) s'étendent dans le proche voisinage l'un de l'autre et chacun s'étend vers l'arrière et vers le haut. Chaque élément d'appui (119, 120) comporte à son extrémité supérieure (144, 145) correspondante une autre surface d'appui (146, 147) située au moins sensiblement à la verticale des axes longitudinaux (34a, 34a') des rouleaux de rappuyage (34, 34') et au-dessus de ces derniers. Lors du travail, la traverse d'appui (130) de l'arceau (122) s'appuie sur l'une ou sur les deux surfaces d'appui (146, 147) selon les conditions de travail. Plus précisément c'est sur la surface d'appui (146, 147) qui s'étend le plus en hauteur que s'appuie la traverse d'appui (130) ce qui permet avantageusement de positionner, lors du travail, la structure porteuse centrale (60) en fonction de l'organe de référence situé le plus en hauteur et permet donc de ce fait de contrôler le plus précisément la profondeur de travail des éléments semeurs (63), notamment des éléments semeurs (63) liés à ladite structure porteuse centrale (60).

Les surfaces d'appui (146, 147) des éléments d'appui (119, 120) du troisième dispositif d'appui (88) ont au moins sensiblement la même forme que la surface d'appui (113) du premier élément d'appui (91) du premier dispositif d'appui (86) de manière à remplir au moins sensiblement une fonction identique à celle du premier élément d'appui (91). Par conséquent, les surfaces d'appui (146, 147) ne seront pas décrites davantage.

On notera encore que cette machine agricole combinée de travail du sol et de semis (1) est, telle que représentée sur la figure 1, sensiblement symétrique par rapport au plan vertical (149) dirigé suivant la direction d'avance au travail (13) et passant au moins sensiblement au milieu des axes longitudinaux (10a, 10a') des premières articulations (10, 10') et des axes longitudinaux (81a, 81a') des douzièmes articulations (81, 81').

Cette machine agricole combinée de travail du sol et de semis (1) fonctionne de la manière suivante.

Lorsqu'elle est en position de travail les unités de travail du sol (8, 8') et les structures porteuses (60, 61, 61') s'étendent au moins sensiblement parallèlement au sol (S). Les rouleaux de rappuyage (34, 34') reposent sur la surface du sol (S) et les outils de travail du sol (33) et les éléments semeurs (63) s'étendent quelque peu sous la surface du sol (S). Lorsque le sol (S) est au moins sensiblement plan, les butées (90, 90', 118) reposent sur les éléments d'appui (91, 91', 119, 120) correspondant ce qui permet de limiter le déplacement vers le bas du dispositif d'implantation (56) de la semence dans le sol (S).

Lorsque le sol (S) n'est pas plan, l'opérateur peut agir sur les différents dispositifs de liaison (45, 45', 84, 85) tels que décrit précédemment de manière à autoriser aux unités de travail du sol (8, 8') de pivoter autour des axes longitudinaux (10a, 10a') des premières articulations (10, 10') et aux structures porteuses latérales (61, 61') de pivoter autour des axes longitudinaux (81a, 81a') des douzièmes articulations (81, 81').

De tels dispositifs de liaison (45, 45', 84, 85) permettent avantageusement aux unités de travail du sol (8, 8') et aux structures porteuses latérales (61, 61') de suivre les inégalités du sol (S). Dans ce cas de figure, chaque structure porteuse latérale (61, 61') est soutenue par le rouleau de rappuyage (34, 34') correspondant, au moyen des premières butées (90, 90') qui s'appuient sur les premiers éléments d'appui (91, 91') alors que la structure porteuse centrale (60) est soutenue par l'un ou l'autre ou les deux rouleaux de rappuyage (34, 34') au moyen de la troisième butée (118) qui s'appuie sur l'élément d'appui primaire ou secondaire (119, 120) situé le plus en hauteur ou sur lesdits deux éléments (119, 120) s'ils s'étendent au même niveau.

L'opérateur peut encore choisir entre un autre mode d'utilisation selon les conditions de travail. Lorsque le sol (S) est au moins sensiblement plan, l'opérateur agit sur les différents dispositifs de liaison (45, 45', 84, 85) tels que décrit précédemment de manière à ne pas autoriser aux unités de travail du sol (8, 8') de pivoter autour des axes longitudinaux (10a, 10a') des premières articulations (10, 10') et aux structures porteuses latérales (61, 61') de pivoter autour des axes longitudinaux (8 la, 81a') des douzièmes articulations (81, 81').

Dans ce cas de figure, les trois structures porteuses (60, 61, 61') peuvent être considérées comme une structure porteuse rigide ce qui ne nécessite plus de premier et de deuxième dispositifs d'appui (86, 86'). A cet effet, les trois structures porteuses (60, 61, 61') reposent sur les rouleaux de rappuyage (34, 34') uniquement au moyen de la troisième butée (118) qui s'appuie sur l'élément d'appui primaire ou secondaire (119, 120) situé le plus en hauteur ou sur les deux éléments (119, 120) s'ils s'étendent au même niveau.

Il convient encore de noter que, lors du travail, le dispositif de réglage (36, 36') des unités de travail du sol (8, 8') n'empêche nullement les herses rotatives (14, 14') de se déplacer vers le haut par rapport aux rouleaux de rappuyage (34, 34').

Ainsi, lorsqu'une herse rotative (14, 14') rencontre un obstacle, elle peut, indépendamment de l'autre herse rotative (14, 14'), se soulever sans problème pour passer par-dessus ledit obstacle sans que cela n'influence la position des structures porteuses (60, 61, 61') grâce notamment aux formes des surfaces d'appui (113, 113', 146, 147) des éléments d'appui (91, 91', 119, 120).

On notera également que les dispositifs d'appui (86, 86', 88) n'empêchent nullement le dispositif d'implantation (56) de la semence dans le sol de se déplacer vers le haut par rapport aux rouleaux de rappuyage (34, 34'). A cet effet, lorsque le dispositif d'implantation (56) de la semence dans le sol rencontre un obstacle, il peut se soulever pour passer par-dessus ledit obstacle.

Lorsque l'opérateur souhaite amener la machine combinée de travail du sol et de semis (1) de la position de travail dans la position de transport, il active dans un premier temps le dispositif d'attelage (2) du véhicule moteur (3) pour soulever ladite machine combinée de travail du sol et de semis (1) et la dégager du sol (S).

Ensuite, dans un deuxième temps, l'opérateur active le dispositif de relevage (73) du semoir (5) de manière à relever le dispositif d'implantation (56) et dégager les éléments semeurs (63) du sol (S).

Dans un troisième temps, l'opérateur active le deuxième dispositif de manoeuvre (82) de manière à pivoter les structures porteuses latérales (61, 61') vers le haut autour des axes longitudinaux (81a, 81a') des douzièmes articulations (81, 81') correspondantes jusqu'à ce que lesdites structures porteuses latérales (61, 61') s'étendent sensiblement verticalement vers le haut.

Enfin, dans un quatrième temps, l'opérateur active le premier dispositif de manoeuvre (41) de manière à pivoter les unités de travail du sol (8, 8') vers le haut autour des axes longitudinaux (10a, 10a') des premières articulations (10, 10') correspondantes jusqu'à ce que lesdites unités de travail du sol (8, 8') s'étendent au moins sensiblement verticalement vers le haut.

La machine combinée de travail du sol et de semis (1) est en position de transport.

Lorsque l'opérateur souhaite amener la machine combinée de travail du sol et de semis (1) de la position de transport dans la position de travail, il procède de la manière inverse à celle décrite ci-dessus en activant dans l'ordre le premier dispositif de manoeuvre (41), le deuxième dispositif de manoeuvre (82), le dispositif de relevage (73) du semoir (5) et le dispositif d'attelage (2) du véhicule moteur (3).

Pour ne pas respecter toutes les phases de mise en position de transport ou de travail, l'opérateur peut d'abord escamoter la première et la deuxième butées (90, 90') à l'aide du moyen (115, 115') décrit précédemment. Ainsi il peut amener la machine de travail du sol (4) dans la position de travail ou de transport sans se soucier de la position du semoir (5) par rapport à la position des unités de travail du sol (8, 8').

Lors du travail, pour effectuer les manoeuvres de demi-tour en bout de parcelle, par exemple, l'opérateur agit uniquement sur le dispositif d'attelage (2) du véhicule moteur (3) pour soulever la machine combinée de travail du sol et de semis (1) pour la dégager du sol (S). Il peut en sus agir sur le dispositif de relevage (73) du semoir (5) pour dégager davantage le dispositif d'implantation (56) du sol (S).

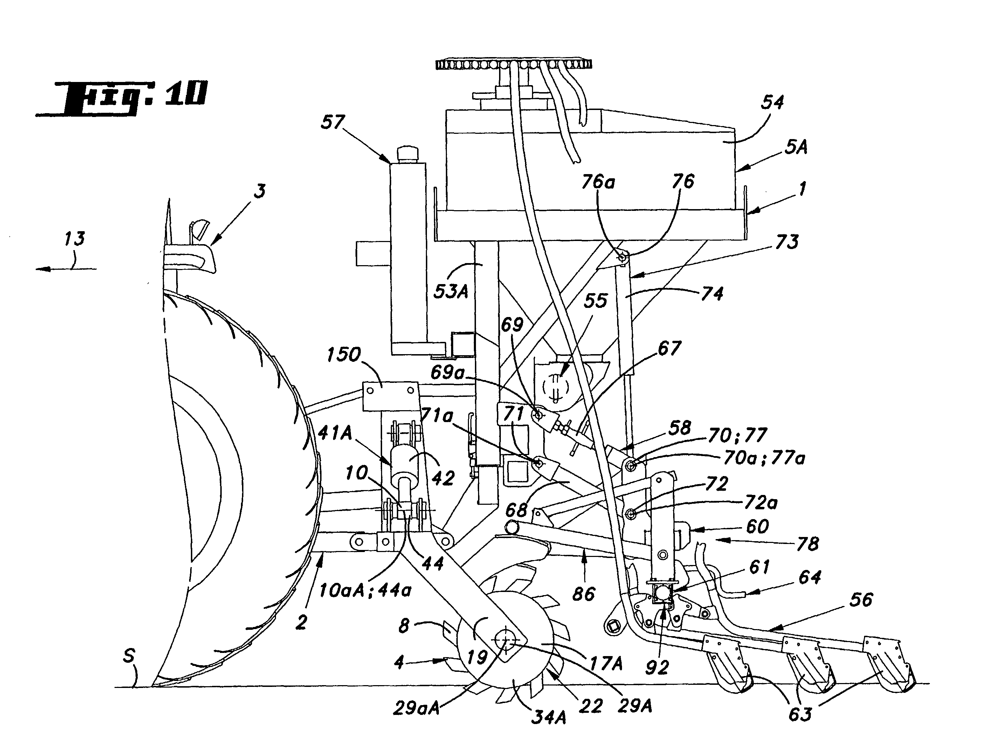

La figure 10 représente un semoir (5A) selon une deuxième forme de réalisation. Ce semoir (5A) comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments du semoir (5) équipant la machine agricole combinée de travail du sol et de semis (1) décrite précédemment, ces éléments garderont également le même numéro de repère qui est en sus suivit de la lettre A. Ils ne seront décrits que si cela s'avère nécessaire.

Ce semoir (SA) selon cette deuxième forme de réalisation est dans l'ensemble très semblable au semoir (5). On remarquera toutefois que ce semoir (SA) est destiné à être attelé directement au véhicule moteur (3). A cet effet, le châssis (53A) du semoir (SA) comporte une structure d'attelage (150) permettant d'atteler le semoir (SA) au dispositif d'attelage (2) du véhicule moteur (3).

On remarquera encore que ce semoir (5A) comporte deux organes de référence (17A, 17'A) constitués de deux rouleaux de rappuyage (34A, 34'A) qui sont au moins sensiblement identiques aux rouleaux de rappuyage (34, 34') décrit précédemment.

Ces rouleaux de rappuyage (34A, 34'A) ont également comme fonction de rappuyer le sol (S) et de former des organes de référence permettant de contrôler la position du dispositif d'implantation (56) de la semence dans le sol (S).

On notera toutefois que les rouleaux de rappuyage (34A, 34'A) sont directement liés à la structure d'attelage (150) au moyen des articulations (29aA, 29a'A) et qu'ils peuvent également être pivotés vers le haut jusque dans une position sensiblement verticale de transport autour des axes longitudinaux (10aA, 10a'A) des articulations (10A, 10'A) au moyen d'un premier dispositif de manoeuvre (41A).

Le fonctionnement de ce semoir (SA) est dans son ensemble semblable à celui du semoir (5) décrit précédemment.

Finalement diverses modifications peuvent être apportées aux exemples qui viennent d'être décrits, notamment en ce qui concerne la constitution des divers éléments ou par substitution d'équivalents techniques, sans pour autant sortir du domaine de protection.

C'est ainsi qu'il est par exemple possible de concevoir un semoir comportant :
- une première structure porteuse latérale et une deuxième structure porteuse latérale ;
- un premier organe de référence et un deuxième organe de référence ;
- un premier dispositif d'appui situé à l'extrémité extérieure de la première structure porteuse latérale destinée à s'appuyer contre le premier organe de référence de manière à limiter le déplacement de la première structure porteuse latérale ;
- un deuxième dispositif d'appui situé à l'extrémité extérieure de la deuxième structure porteuse latérale destinée à s'appuyer contre le deuxième organe de référence de manière à limiter le déplacement de la deuxième structure porteuse latérale ;
- un troisième dispositif d'appui destiné à s'appuyer contre l'un au moins des organes de référence de manière à limiter le déplacement d'au moins une desdites structures porteuses à son extrémité intérieure.

Il est également possible de prévoir un moyen permettant d'escamoter le premier et le deuxième éléments d'appui (91, 91') au lieu d'escamoter la première et la deuxième butées (90, 90') de sorte à pouvoir replier les structures porteuses latérales (61, 61') et les organes de référence (17, 17') vers le haut pour le transport sans se soucier de l'ordre de repliage. Il est bien entendu également possible de prévoir deux moyens, l'un permettant d'escamoter la première et la deuxième butées (90, 90') et l'autre permettant d'escamoter le premier et le deuxième éléments d'appui (91, 91').

Il est également possible d'envisager d'autres moyens de réglage permettant de varier la position initiale des éléments d'appui (91, 91', 119, 120) des structures porteuses (60, 61, 61') sans agir sur les moyens de réglage (108, 139) permettant de varier la position initiale des butées (90, 90', 118). Il est bien entendu également possible de prévoir deux moyens de réglage, l'un permettant d'agir sur les butées (90, 90', 118) et l'autre permettant d'agir sur les éléments d'appui (91, 91', 119, 120).

Il est encore possible de prévoir que le deuxième dispositif de manoeuvre (82) comporte deux vérins de manoeuvre liés chacun d'une part à une structure porteuse latérale (61, 61') au moyen d'un dispositif de liaison (84, 85) et d'autre part à la structure porteuse centrale (60) au moyen d'une articulation respective d'axe longitudinal au moins sensiblement parallèle aux axes longitudinaux (8 la, 81a') des douzièmes articulations (81, 81').

Enfin, il est encore parfaitement possible de concevoir la machine agricole combinée de travail du sol et de semis avec une machine de travail du sol autre que celle représentée sur les figures 1 à 9. Ainsi, il est possible de remplacer les herses rotatives (14, 14') par des fraises rotatives ou des outils à dents non animés par exemple.

## Revendications

1. Semoir comportant :
- un châssis (53 ; 53A) destiné à être lié directement ou indirectement à un véhicule moteur (3) ;
- un dispositif d'implantation (56) de la semence dans le sol comprenant au moins une première structure porteuse (61) et une deuxième structure porteuse (61') ;
- au moins un organe de référence (17, 17' ; 17A, 17'A) détectant la surface au sol dans le voisinage dudit dispositif d'implantation (56) de la semence dans le sol ;
***caractérisé en ce* qu'**il est prévu :
- un premier organe de référence (17 ; 17A) et un deuxième organe de référence (17' ; 17'A) qui peuvent se déplacer en hauteur indépendamment du dispositif d'implantation (56) de la semence dans le sol ;
- au moins un premier dispositif d'appui (86) comportant une première butée (90) et un premier élément d'appui (91), le premier dispositif d'appui (86) est destiné à s'appuyer contre le premier organe de référence (17, 17A) de manière à limiter ledéplacement de la première structure porteuse (61) ;
- au moins un deuxième dispositif d'appui (86') comportant une deuxième butée (90') et un deuxième élément d'appui (91'), le deuxième dispositif d'appui (86') est destiné à s'appuyer contre le deuxième organe de référence (17', 17'A) de manière à limiter le déplacement de la deuxième structure porteuse (61');
- au moins un troisième dispositif d'appui (88) comportant une troisième butée (118) et au moins un élément d'appui (119, 120), le troisième dispositif d'appui (88) est destiné à s'appuyer contre l'un au moins des organes de référence (17, 17'; 17A, 17'A) de manière à limiter le déplacement d'au moins une desdites structures porteuses (61, 61').

2. Semoir selon la revendication 1, ***caractérisé en ce* que** le dispositif d'implantation (56) de la semence dans le sol comporte :
- une structure porteuse centrale (60) ;
- une première structure porteuse latérale (61) liée à l'une (78) des extrémités (78, 78') de ladite structure porteuse centrale (60) ; et
- une deuxième structure porteuse latérale (61') liée à l'autre (78') desdites extrémités (78, 78') de ladite structure porteuse centrale (60) ;
le premier dispositif d'appui (86) étant destiné à limiter le déplacement de la première structure porteuse latérale (61),
le deuxième dispositif d'appui (86') étant destiné à limiter le déplacement de la deuxième structure porteuse latérale (61'), et
le troisième dispositif d'appui (88) étant destiné à limiter le déplacement de la structure porteuse centrale (60).

3. Semoir selon la revendication 2, ***caractérisé en ce* que** la structure porteuse centrale (60) est liée au châssis (53) au moyen d'une structure de liaison (58) et que chaque structure porteuse latérale (61, 61') est liée à l'extrémité latérale (78, 78') correspondante de ladite structure porteuse centrale (60) au moyen d'une articulation (81, 81') respective d'axe longitudinal (81a, 81a') dirigé au moins sensiblement suivant la direction d'avance au travail (13).

4. Semoir selon la revendication 3, ***caractérisé en ce* que** la structure de liaison (58) comporte des bielles (67, 68) liées chacune au châssis (53 ; 53A) au moyen d'une articulation (69, 71) et à la structure porteuse centrale (60) au moyen d'une articulation (70, 72), lesdites bielles (67, 68) formant avec le châssis (53, 53A) et la structure porteuse centrale (60) au moins sensiblement un parallélogramme.

5. Semoir selon l'une quelconque des revendications 1 à 4, ***caractérisé en ce* que** chaque organe de référence (17, 17' ; 17A, 17'A) est lié directement ou indirectement au châssis (53, 53A) au moyen d'une articulation (10, 10') respective d'axe longitudinal (10a, 10a') dirigé au moins sensiblement suivant la direction d'avance au travail (13).

6. Semoir selon la revendication 5, ***caractérisé en ce* qu'**il est prévu un premier dispositif de manoeuvre (41) permettant de pivoter chaque organe de référence (17, 17' ; 17A, 17'A) vers le haut autour des axes longitudinaux (10a, 10a') de son articulation respective (10, 10').

7. Semoir selon la revendication 6, ***caractérisé en ce* qu'**il est prévu un premier dispositif de liaison (45, 45') permettant, lors du travail, un certain débattement des organes de référence (17, 17' ; 17A, 17'A) par rapport au premier châssis (53 ; 53A) ou au contraire de condamner ledit débattement.

8. Semoir selon la revendication 3, ***caractérisé en ce* qu'**il est prévu un deuxième dispositif de manoeuvre (82) permettant de pivoter chaque structure porteuse latérale (61, 61') vers le haut autour des axes longitudinaux (81a, 81a') de son articulation respective (81, 81').

9. Semoir selon la revendication 8, ***caractérisé en ce* qu'**il est prévu au moins un deuxième dispositif de liaison (84, 85) permettant, lors du travail, un certain débattement des structures porteuses latérales (61, 61') par rapport à la structure porteuse centrale (60) ou au contraire de condamner ledit débattement.

10. Semoir selon l'une quelconque des revendications 1 à 9, ***caractérisé en ce* que** chaque dispositif d'appui (86, 86', 88) limite le déplacement de la structure porteuse (60, 61, 61') correspondante vers le bas.

11. Semoir selon l'une quelconque des revendications 2 à 10, ***caractérisé en ce* que** le premier dispositif d'appui (86) comporte d'une part une première butée (90) fixée à la première structure porteuse latérale (61) et d'autre part un premier élément d'appui (91) fixé au premier organe de référence (17; 17A), ladite première butée (90) étant destinée à s'appuyer contre ledit premier élément d'appui (91).

12. Semoir selon l'une quelconque des revendications 2 à 11, ***caractérisé en ce* que** le deuxième dispositif d'appui (86') comporte d'une part une deuxième butée (90') fixée à la deuxième structure porteuse latérale (61') et d'autre part, un deuxième élément d'appui (91') fixé au deuxième organe de référence (17'; 17'A), ladite deuxième butée (90') étant destinée à s'appuyer contre ledit deuxième élément d'appui (91').

13. Semoir selon les revendications 11 et 12, ***caractérisé en ce* que** la première et la deuxième butées (90, 90') sont fixées aux extrémités extérieures (92, 116) correspondantes des structures porteuses latérales (61, 61') correspondantes et que le premier et le deuxième éléments d'appui (91, 91') sont fixés aux extrémités extérieures (22, 22' ; 22A, 22'A) correspondantes des organes de référence (17, 17'; 17A, 17'A) correspondants.

14. Semoir selon l'une quelconque des revendications 11 à 13, ***caractérisé en ce* qu'**il est prévu un moyen (115, 115') permettant d'escamoter la première et la deuxième butées (90, 90') ou le premier et le deuxième éléments d'appui (91, 91'), ou la première et la deuxième butées (90, 90') et le premier et le deuxième éléments d'appui (91, 91').

15. Semoir selon l'une quelconque des revendications 2 à 14, ***caractérisé en ce* que** le troisième dispositif d'appui (88) comporte d'une part une troisième butée (118) fixée à la structure porteuse centrale (60) et d'autre part au moins un élément d'appui (119, 120) fixé au premier ou au deuxième organe de référence (17, 17' ; 17A, 17'A), ladite troisième butée (118) étant destinée à s'appuyer contre ledit (lesdits) élément(s) d'appui (119, 120).

16. Semoir selon la revendication 15, ***caractérisé en ce* que** le troisième dispositif d'appui (88) comporte un élément d'appui primaire (119) et un élément d'appui secondaire (120), ledit élément d'appui primaire (119) étant fixé à l'extrémité intérieure (32) à l'un (17 ; 17A) des organes de référence

17. Semoir selon les revendications 11, 12 et 15, ***caractérisé en ce* qu'**il est prévu au moins un moyen de réglage (108, 139) permettant de varier la position initiale des butées (90, 90', 118) ou des éléments d'appui (91, 91', 119, 120) ou des butées (90, 90', 118) et des éléments d'appui (91, 91', 119).

18. Machine agricole combinée de travail du sol et de semis comportant une machine de travail du sol (4) et un semoir (5), ***caractérisée en ce* que** le semoir (5) est un semoir selon l'une quelconque des revendications 1 à 17. (17, 17'; 17A, 17'A), tandis que l'élément d'appui secondaire (120) est fixé à l'extrémité intérieure (32') de l'autre organe de référence (17'; 17'A).

19. Machine agricole combinée de travail du sol et de semis selon la revendication 18, ***caractérisée en ce* qu'**elle comporte deux rouleaux de rappuyage (34, 34' ; 34A, 34'A) constituant les organes de référence (17, 17' ; 17A, 17'A).

20. Machine agricole combinée de travail du sol et de semis selon la revendication 19, ***caractérisée en ce* qu'**elle comporte des outils de travail du sol (33) qui peuvent se déplacer librement vers le haut par rapport aux rouleaux de rappuyage (34, 34'; 34A, 34'A).

21. Machine agricole combinée de travail du sol et de semis selon l'une quelconque des revendications 19 à 20, ***caractérisée en ce* que** les rouleaux de rappuyage (34, 34' ; 34A, 34'A) sont liés à la machine de travail du sol (4).

22. Machine agricole combinée de travail du sol et de semis selon l'une quelconque des revendications 19 à 21, ***caractérisée en ce* que** les rouleaux de rappuyage (34, 34' ; 34A, 34'A) sont de forme au moins sensiblement cylindrique et s'étendent sur au moins sensiblement toute la largeur du semoir (5), chaque rouleau de rappuyage (34, 34'; 34A, 34'A) est destiné à rouler sur la surface du sol (S) autour d'un axe de rotation (34a, 34a' ; 34aA, 34a'A) respectif s'étendant au moins sensiblement horizontalement et transversalement à la direction d'avance au travail (13).

23. Machine agricole combinée de travail du sol et de semis selon la revendication 22, et les revendications 11, 12 et 16, ***caractérisée en ce* que** chaque élément d'appui (91, 91', 119, 120) comporte une portion de surface cylindrique (114) au moins sensiblement centrée sur l'axe de rotation (34a, 34a' ; 34aA, 34a'A) du rouleau de rappuyage (34, 34' ; 34A, 34'A) correspondant.

## Patentansprüche

1. Sämaschine, die
- einen Rahmen (53; 53A) zur direkten oder indirekten Verbindung mit einem Motorfahrzeug (3);
- eine Vorrichtung (56) zum Einbringen von Samen in den Boden, die mindestens eine erste Tragkonstruktion (61) und eine zweite Tragkonstruktion (61') aufweist;
- mindestens ein Bezugselement (17, 17'; 17A, 17'A), das die Oberfläche des Bodens in der Nähe der Vorrichtung (56) zum Einbringen von Samen in den Boden erfasst umfasst,
***dadurch gekennzeichnet*, dass**
- ein erstes Bezugselement (17; 17A) und ein zweites Bezugselement (17'; 17'A), die sich unabhängig von der Vorrichtung (56) zum Einbringen von Samen in den Boden in der Höhe verschieben können;
- mindestens eine erste Stützvorrichtung (86), die einen ersten Anschlag (90) und ein erstes Stützelement (91) aufweist, wobei sich die erste Stützvorrichtung (86) am ersten Bezugselement (17, 17A) abstützen soll, um die Verschiebung der ersten Tragkonstruktion (61) zu begrenzen;
- mindestens eine zweite Stützvorrichtung (86'), die einen zweiten Anschlag (90') und ein zweites Stützelement (91') aufweist, wobei sich die zweite Stützvorrichtung (86') am zweiten Bezugselement (17', 17'A) abstützen soll, um die Verschiebung der zweiten Tragkonstruktion (61') zu begrenzen;
- mindestens eine dritte Stützvorrichtung (88), die einen dritten Anschlag (118) und mindestens ein Stützelement (119, 120) aufweist, wobei sich die dritte Stützvorrichtung (88) an mindestens einem der Bezugselemente (17, 17'; 17A, 17'A) abstützen soll, um die Verschiebung mindestens einer der Tragkonstruktionen (61, 61') zu begrenzen, vorgesehen sind.

2. Sämaschine nach Anspruch 1, ***dadurch gekennzeichnet*, dass** die Vorrichtung (56) zum Einbringen von Samen in den Boden
- eine mittlere Tragkonstruktion (60);
- eine erste seitliche Tragkonstruktion (61), die mit dem einen (78) der Enden (78, 78') der mittleren Tragkonstruktion (60) verbunden ist; und
- eine zweite seitliche Tragkonstruktion (61'), die mit dem anderen (78') der Enden (78, 78') der mittleren Tragkonstruktion (60) verbunden ist, umfasst,
wobei die erste Stützvorrichtung (86) die Verschiebung der ersten seitlichen Tragkonstruktion (61) begrenzen soll,
wobei die zweite Stützvorrichtung (86') die Verschiebung der zweiten seitlichen Tragkonstruktion (61') begrenzen soll, und
wobei die dritte Stützvorrichtung (88) die Verschiebung der mittleren Tragkonstruktion (60) begrenzen soll.

3. Sämaschine nach Anspruch 2, ***dadurch gekennzeichnet*, dass** die mittlere Tragkonstruktion (60) mittels einer Verbindungskonstruktion (58) mit dem Rahmen (53) verbunden ist und jede seitliche Tragkonstruktion (61, 61') mittels eines jeweiligen Gelenks (81, 81') mit einer zumindest im Wesentlichen in Arbeitsvorschubrichtung (13) ausgerichteten Längsachse (81a, 81a') mit dem entsprechenden seitlichen Ende (78, 78') der mittleren Tragkonstruktion (60) verbunden ist.

4. Sämaschine nach Anspruch 3, ***dadurch gekennzeichnet*, dass** die Verbindungskonstruktion (58) Stangen (67, 68) aufweist, die jeweils mittels eines Gelenks (69, 71) mit dem Rahmen (53; 53A) und mittels eines Gelenks (70, 72) mit der mittleren Tragkonstruktion (60) verbunden sind, wobei die Stangen (67, 68) mit dem Rahmen (53, 53A) und der mittleren Tragkonstruktion (60) zumindest im Wesentlichen ein Parallelogramm bilden.

5. Sämaschine nach irgend einem der Ansprüche 1 bis 4, ***dadurch gekennzeichnet*, dass** jedes Bezugselement (17, 17'; 17A, 17'A) mittels eines jeweiligen Gelenks (10, 10') mit einer zumindest im Wesentlichen in Arbeitsvorschubrichtung (13) ausgerichteten Längsachse (10a, 10a') direkt oder indirekt mit dem Rahmen (53, 53A) verbunden ist.

6. Sämaschine nach Anspruch 5, ***dadurch gekennzeichnet*, dass** eine erste Betätigungsvorrichtung (41) vorgesehen ist, die ein Nachobenschwenken jedes Bezugselements (17, 17'; 17A, 17'A) um die Längsachsen (10a, 10a') ihres jeweiligen Gelenks (10, 10') gestattet.

7. Sämaschine nach Anspruch 6, ***dadurch gekennzeichnet*, dass** eine erste Verbindungsvorrichtung (45, 45') vorgesehen ist, die im Betrieb ein gewisses Schwingen der Bezugselemente (17, 17'; 17A, 17'A) bezüglich des ersten Rahmens (53; 53A) gestattet oder im Gegenteil dieses Schwingen sperrt.

8. Sämaschine nach Anspruch 3, ***dadurch gekennzeichnet*, dass** eine zweite Betätigungsvorrichtung (82) vorgesehen ist, die ein Nachobenschwenken jeder seitlichen Tragkonstruktion (61, 61') um die Längsachsen (81a, 81a') ihres jeweiligen Gelenks (81, 81') gestattet.

9. Sämaschine nach Anspruch 8, ***dadurch gekennzeichnet*, dass** mindestens eine zweite Verbindungsvorrichtung (84, 85) vorgesehen ist, die im Betrieb ein gewisses Schwingen der seitlichen Tragkonstruktionen (61, 61') bezüglich der mittleren Tragkonstruktion (60) gestattet oder im Gegenteil dieses Schwingen sperrt.

10. Sämaschine nach irgend einem der Ansprüche 1 bis 9, ***dadurch gekennzeichnet*, dass** jede Stützvorrichtung (86, 86', 88) die Verschiebung der entsprechenden Tragkonstruktion (60, 61, 61') nach unten begrenzt.

11. Sämaschine nach irgend einem der Ansprüche 2 bis 10, ***dadurch gekennzeichnet*, dass** die erste Stützvorrichtung (86) einerseits einen ersten Anschlag (90), der an der ersten seitlichen Tragkonstruktion (61) befestigt ist, und andererseits ein erstes Stützelement (91), das am ersten Bezugselement (17; 17A) befestigt ist, aufweist, wobei sich der erste Anschlag (90) am ersten Stützelement (91) abstützen soll.

12. Sämaschine nach irgend einem der Ansprüche 2 bis 11, ***dadurch gekennzeichnet*, dass** die zweite Stützvorrichtung (86') einerseits einen zweiten Anschlag (90'), der an der zweiten seitlichen Tragkonstruktion (61') befestigt ist, und andererseits ein zweites Stützelement (91'), das am zweiten Bezugselement (17'; 17'A) befestigt ist, aufweist, wobei sich der zweite Anschlag (90') am zweiten Stützelement (91') abstützen soll.

13. Sämaschine nach den Ansprüchen 11 und 12, ***dadurch gekennzeichnet*, dass** der erste und der zweite Anschlag (90, 90') an den entsprechenden äußeren Enden (92, 116) der entsprechenden seitlichen Tragkonstruktionen (61, 61') befestigt sind und das erste und das zweite Stützelement (91, 91') an den entsprechenden äußeren Enden (22, 22'; 22A, 22'A) der entsprechenden Bezugselemente (17, 17'; 17A, 17'A) befestigt sind.

14. Sämaschine nach irgend einem der Ansprüche 11 bis 13, ***dadurch gekennzeichnet*, dass** ein Mittel (115, 115') vorgesehen ist, das das Einziehen des ersten und des zweiten Anschlags (90, 90') oder des ersten und des zweiten Stützelements (91, 91') oder des ersten und des zweiten Anschlags (90, 90') und des ersten und des zweiten Stützelements (91, 91') gestattet.

15. Sämaschine nach irgend einem der Ansprüche 2 bis 14, ***dadurch gekennzeichnet*, dass** die dritte Stützvorrichtung (88) einerseits einen dritten Anschlag (118), der an der mittleren Tragkonstruktion (60) befestigt ist, und andererseits mindestens ein Stützelement (119, 120), das am ersten oder am zweiten Bezugselement (17, 17'; 17A, 17'A) befestigt ist, aufweist, wobei sich der dritte Anschlag (118) an dem (den) Stützelement(en) (119, 120) abstützen soll.

16. Sämaschine nach Anspruch 15, ***dadurch gekennzeichnet*, dass** die dritte Stützvorrichtung (88) ein primäres Stützelement (119) und ein sekundäres Stützelement (120) aufweist, wobei das primäre Stützelement (119) am inneren Ende (32) eines (17; 17A) der Bezugselemente (17, 17'; 17A, 17'A) befestigt ist, während das sekundäre Stützelement (120) am inneren Ende (32') des anderen Bezugselements (17'; 17'A) befestigt ist.

17. Sämaschine nach den Ansprüchen 11, 12 und 15, ***dadurch gekennzeichnet*, dass** mindestens ein Einstellmittel (108, 139) vorgesehen ist, das es gestattet, die Anfangsposition der Anschläge (90, 90', 118) oder der Stützelemente (91, 91', 119, 120) oder der Anschläge (90, 90', 118) und der Stützelemente (91, 91', 119) zu ändern.

18. Kombinierte Landmaschine zur Bodenbearbeitung und zum Säen, die eine Bodenbearbeitungsmaschine (4) und eine Sämaschine (5) aufweist, ***dadurch gekennzeichnet*, dass** es sich bei der Sämaschine (5) um eine Sämaschine nach irgend einem der Ansprüche 1 bis 17 handelt.

19. Kombinierte Landmaschine zur Bodenbearbeitung und zum Säen nach Anspruch 18, ***dadurch gekennzeichnet*, dass** sie zwei Presswalzen (34, 34'; 34A, 34'A) aufweist, die die Bezugselemente (17, 17'; 17A, 17'A) bilden.

20. Kombinierte Landmaschine zur Bodenbearbeitung und zum Säen nach Anspruch 19, ***dadurch gekennzeichnet*, dass** sie Bodenbearbeitungswerkzeuge (33) aufweist, die sich bezüglich der Presswalzen (34, 34'; 34A, 34'A) frei nach oben bewegen können.

21. Kombinierte Landmaschine zur Bodenbearbeitung und zum Säen nach irgend einem der Ansprüche 19 oder 20, ***dadurch gekennzeichnet*, dass** die Presswalzen (34, 34'; 34A, 34'A) mit der Bodenbearbeitungsmaschine (4) verbunden sind.

22. Kombinierte Landmaschine zur Bodenbearbeitung und zum Säen nach irgend einem der Ansprüche 19 bis 21, ***dadurch gekennzeichnet*, dass** die Presswalzen (34, 34'; 34A, 34'A) eine im Wesentlichen zylindrische Form aufweisen und sich über zumindest im Wesentlichen die ganze Breite der Sämaschine (5) erstrecken, und jede Presswalze (34, 34'; 34A, 34'A) um eine jeweilige Drehachse (34a, 34a'; 34aA, 34a'A), die sich zumindest im Wesentlichen horizontal und quer zur Arbeitsvorschubrichtung (13) erstreckt, über die Oberfläche des Bodens (S) rollen soll.

23. Kombinierte Landmaschine zur Bodenbearbeitung und zum Säen nach Anspruch 22 und den Ansprüchen 11, 12 und 16, ***dadurch gekennzeichnet*, dass** jedes Stützelement (91, 91', 119, 120) einen zumindest im Wesentlichen auf der Drehachse (34a, 34a'; 34aA, 34a'A) der entsprechenden Presswalze (34, 34'; 34A, 34'A) zentrierten Zylinderflächenteil (114) aufweist.

## Claims

1. Seeder comprising;
- a chassis (53; 53A) intended to be connected directly or indirectly to a motor vehicle (3);
- a device (56) for planting seed in the ground, comprising at least a first bearing structure (61) and a second bearing structure (61');
- at least a reference element (17, 17'; 17A, 17'A) detecting the surface on the ground in the vicinity of the said device (56) for planting seed in the ground;
***characterized in* that** there are provided:
- a first reference element (17; 17A) and a second reference element (17'; 17'A) which can move heightwise independently of the device (56) for planting seed in the ground;
- at least a first support device (86) comprising a first stop (90) and a first support element (91), the first support device (86) is intended to rest against the first reference element (17, 17A) so as to limit the movement of the first bearing structure (61);
- at least a second support device (86') comprising a second stop (90') and a second support element (91'), the second support device (86') is intended to rest against the second reference element (17', 17'A) so as to limit the movement of the second bearing structure (61');
- at least a third support device (88) comprising a third stop (118) and at least a support element (119, 120), the third support device (88) is intended to rest against at least one of the reference elements (17, 17'; 17A, 17'A) so as to limit the movement of at least one of the said bearing structures (61, 61').

2. Seeder according to Claim 1, ***characterized in* that** the device (56) for planting seed in the ground comprises:
- a central bearing structure (60);
- a first lateral bearing structure (61) connected to one (78) of the ends (78, 78') of the said central bearing structure (60); and
- a second lateral bearing structure (61') connected to the other (78') of the said ends (78, 78') of the said central bearing structure (60);
the first support device (86) being intended to limit the movement of the first lateral bearing structure (61),
the second support device (86') being intended to limit the movement of the second lateral bearing structure (61'), and
the third support device (88) being intended to limit the movement of the central bearing structure (60).

3. Seeder according to Claim 2, ***characterized in* that** the central bearing structure (60) is connected to the chassis (53) by means of a connecting structure (58) and **in that** each lateral bearing structure (61, 61') is connected to the corresponding lateral end (78, 78') of the said central bearing structure (60) by means of a respective articulation (81, 81') the longitudinal axis (81a, 81a') of which is directed at least substantially in the direction of forward travel during work (13).

4. Seeder according to Claim 3, ***characterized in* that** the connecting structure (58) comprises connecting-rods (67, 68) each connected to the chassis (53; 53A) by means of an articulation (69, 71) and to the central bearing structure (60) by means of an articulation (70, 72), the said connecting-rods (67, 68) forming, with the chassis (53, 53A) and the central bearing structure (60), at least substantially a parallelogram.

5. Seeder according to any one of Claims 1 to 4, ***characterized in* that** each reference element (17, 17'; 17A, 17'A) is connected directly or indirectly to the chassis (53, 53A) by means of a respective articulation (10, 10') the longitudinal axis (10a, 10a') of which is directed at least substantially in the direction of forward travel during work (13).

6. Seeder according to Claim 5, ***characterized in* that** there is provided a first operating device (41) allowing each reference element (17, 17'; 17A, 17'A) to be pivoted upwards about the longitudinal axes (10a, 10a') of its respective articulation (10, 10').

7. Seeder according to Claim 6, ***characterized in* that** there is provided a first connecting device (45, 45') allowing, during work, the reference elements (17, 17'; 17A, 17'A) a certain displacement with respect to the first chassis (53; 53A) or, on the other hand, barring the said displacement.

8. Seeder according to Claim 3, ***characterized in* that** there is provided a second operating device (82) allowing each lateral bearing structure (61, 61') to be pivoted upwards about the longitudinal axes (81a, 81a') of its respective articulation (81, 81').

9. Seeder according to Claim 8, ***characterized in* that** there is provided at least a second connecting device (84, 85) allowing, during work, the lateral bearing structures (61, 61') a certain displacement with respect to the central bearing structure (60) or, on the other hand, barring the said displacement.

10. Seeder according to any one of Claims 1 to 9, ***characterized in* that** each support device (86, 86', 88) limits the downward movement of the corresponding bearing structure (60, 61, 61').

11. Seeder according to any one of Claims 2 to 10, ***characterized in* that** the first support device (86) comprises, on the one hand, a first stop (90) fixed to the first lateral bearing structure (61) and, on the other hand, a first support element (91) fixed to the first reference element (17; 17A), the said first stop (90) being intended to rest against the said first support element (91).

12. Seeder according to any one of Claims 2 to 11, ***characterized in* that** the second support device (86') comprises, on the one hand, a second stop (90') fixed to the second lateral bearing structure (61') and, on the other hand, a second support element (91') fixed to the second reference element (17'; 17'A), the said second stop (90') being intended to rest against the said second support element (91').

13. Seeder according to Claims 11 and 12, ***characterized in* that** the first and second stops (90, 90') are fixed to the corresponding outer ends (92, 116) of the corresponding lateral bearing structures (61, 61') and **in that** the first and second support elements (91, 91') are fixed to the corresponding outer ends (22, 22'; 22A, 22'A) of the corresponding reference elements (17, 17'; 17A, 17'A).

14. Seeder according to any one of Claims 11 to 13, ***characterized in* that** there is provided a means (115, 115') allowing the first and second stops (90, 90'), or the first and second support elements (91, 91'), or the first and second stops (90, 90') and the first and second support elements (91, 91') to be retracted.

15. Seeder according to any one of Claims 2 to 14, ***characterized in* that** the third support device (88) comprises, on the one hand, a third stop (118) fixed to the central bearing structure (60) and, on the other hand, at least a support element (119, 120) fixed to the first or to the second reference element (17, 17'; 17A, 17'A), the said third stop (118) being intended to rest against the said support element(s) (119, 120).

16. Seeder according to Claim 15, ***characterized in* that** the third support device (88) comprises a primary support element (119) and a secondary support element (120), the said primary support element (119) being fixed to the inner end (32) of one (17; 17A) of the reference elements (17, 17'; 17A, 17'A) while the secondary support element (120) is fixed to the inner end (32') of the other reference element (17'; 17'A).

17. Seeder according to Claims 11, 12 and 15, ***characterized in* that** there is provided at least an adjusting means (108, 139) allowing the initial position of the stops (90, 90', 118) or of the support elements (91, 91', 119, 120) or of the stops (90, 90', 118) and of the support elements (91, 91', 119) to be varied.

18. Combined soil-working and seeding agricultural machine comprising a machine (4) for working the soil and a seeder (5), ***characterized in* that** the seeder (5) is a seeder according to any one of Claims 1 to 17.

19. Combined soil-working and seeding agricultural machine according to Claim 18, ***characterized in* that** it comprises two press rollers (34, 34'; 34A, 34'A) constituting the reference elements (17, 17'; 17A, 17'A).

20. Combined soil-working and seeding agricultural machine according to Claim 19, ***characterized in* that** it comprises soil-working tools (33) which can move freely upwards relative to the press rollers (34, 34'; 34A, 34'A).

21. Combined soil-working and seeding agricultural machine according to any one of Claims 19 to 20, ***characterized in* that** the press rollers (34, 34'; 34A, 34'A) are connected to the soil-working machine (4).

22. Combined soil-working and seeding agricultural machine according to any one of Claims 19 to 21, ***characterized in* that** the press rollers (34, 34'; 34A, 34'A) are of at least substantially cylindrical shape and extend over at least substantially the entire width of the seeder (5), each press roller (34, 34'; 34A, 34'A) is intended to run along the surface of the soil (S) about a respective axis of rotation (34a, 34a'; 34aA, 34a'A) running at least substantially horizontally and transversely to the direction of forward travel during work (13).

23. Combined soil-working and seeding agricultural machine according to Claim 22 and Claims 11, 12 and 16, ***characterized in* that** each support element (91, 91', 119, 120) comprises a cylindrical surface portion (114) at least substantially centred on the axis of rotation (34a, 34a'; 34aA, 34a'A) of the corresponding press roller (34, 34'; 34A, 34'A).
